(19) Europäisches Patentamt
European Patent Office
Office européen des brevets

(11) EP 2 051 111 A1

(12) EUROPEAN PATENT APPLICATION
published in accordance with Art. 153(4) EPC

(43) Date of publication:
22.04.2009 Bulletin 2009/17

(21) Application number: 05820347.2

(22) Date of filing: 21.12.2005

(51) Int Cl.:
*G02B 1/11* (2006.01) *G02B 1/10* (2006.01)
*G02F 1/1335* (2006.01) *G02B 5/30* (2006.01)

(86) International application number:
PCT/JP2005/023527

(87) International publication number:
WO 2006/068200 (29.06.2006 Gazette 2006/26)

(84) Designated Contracting States:
AT BE BG CH CY CZ DE DK EE ES FI FR GB GR HU IE IS IT LI LT LU LV MC NL PL PT RO SE SI SK TR

(30) Priority: 24.12.2004 JP 2004375001

(71) Applicants:
- Panasonic Electric Works Co., Ltd.
Kadoma-shi
Osaka (JP)
- Zeon Corporation
Tokyo 100-8246 (JP)

(72) Inventors:
- Yamaki, Takeyuki
Kadoma-shi,
Osaka 5718686 (JP)
- Yokogawa, Hiroshi
Kadoma-shi,
Osaka 5718686 (JP)
- Tsujimoto, Akira
Kadoma-shi,
Osaka 5718686 (JP)
- Fukuzaki, Ryozo
Kadoma-shi,
Osaka 5718686 (JP)
- Sone, Atsushi
Chiyoda-ku,
Tokyo 1008246 (JP)
- Toyoshima, Tetsuya
Chiyoda-ku,
Tokyo 1008246 (JP)
- Yoshihara, Masanori
Chiyoda-ku,
Tokyo 1008246 (JP)
- Arakawa, Kohei
Chiyoda-ku,
Tokyo 1008246 (JP)

(74) Representative: Vossius & Partner
Siebertstraße 4
81675 München (DE)

# (54) OPTICAL LAMINATED FILM FOR LIQUID CRYSTAL DISPLAY DEVICE

(57) An optical multilayer film for a liquid crystal display comprising a hard coat layer and a low refractive index layer comprising aerogel, which layers are laminated, in this order, directly or with another intervening layer on one surface of a substrate film comprising a transparent resin, wherein the refractive index $n_H$ of the hard coat layer and the refractive index $n_L$ of the low refractive index layer satisfy the following three formulae [1], [2] and [3],

$$\text{Formula [1]}: n_L \leqq 1.37$$

$$\text{Formula [2]}: n_H \geqq 1.53$$

$$\text{Formula [3]}: (n_H)^{1/2} - 0.2 < n_L < (n_H)^{1/2} + 0.2.$$

EP 2 051 111 A1

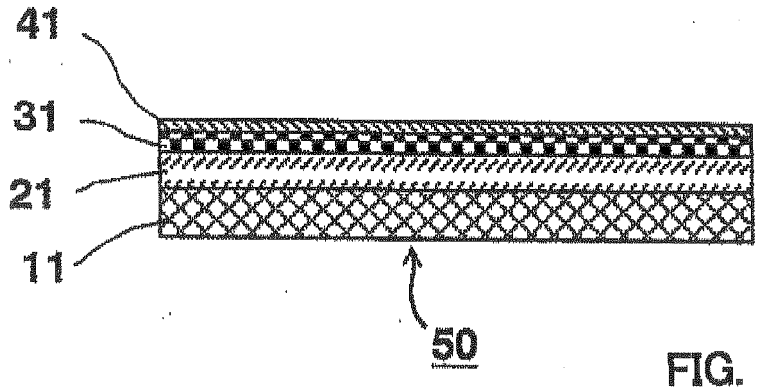


FIG. 1

## Description

Technical Field

This invention relates to an optical multilayer film for a liquid crystal display. More particularly it relates to an optical multilayer film for a liquid crystal display, having a low refractive index layer exhibiting a reduced reflectivity with enhanced efficiency.

Background Art

A polarizing film for a liquid crystal display (hereinafter abbreviated to as "LCD" when appropriate) is often treated to provide with a low refractive index layer for preventing or minimizing mirroring. An enhanced antireflection performance is required especially for a polarizing film of LCD used in the open air. For this requirement, a low refractive index layer comprised of a multilayer film or a single layer film is formed on a substrate film for a polarizing film.

The multilayer film for a low refractive index layer includes, for example, a multilayer film comprising a film of a relatively high refractive index and a film of relatively low refractive index, laminated in this order (for example, see Japanese Unexamined Patent Publication [hereinafter referred to as "JP-A"] No. H4-357134).

The process for forming a film includes, for example, a sol-gel process, a vacuum deposition process, a sputtering: process and a chemical vapor deposition process. These processes comprise a step of exposing to a high temperature or placing in vacuum. At a high-temperature exposing step, a resin substrate film is liable to be distorted or modified whereby the optical properties thereof tend to be varied. Thus, an antireflection film having desired properties is difficult to make. In a vacuum film-forming process, gas is inevitably released from a Substrate resin material within a vacuum apparatus and thus, a high degree of vacuum required for the film-formation is difficult to obtain, therefore, an antireflection film having desired properties is difficult to make.

In the case when a low refractive index layer is comprised of two or more films, two or more coating operations for forming films are required and therefore the film-forming process is troublesome and costly. Further, the film thickness is difficult to control and therefore the desired low light reflection is difficult to attain.

As a process for forming a low refractive index layer comprising a single layer film, there have been proposed a process wherein a metal oxide film comprising multi-metal ingredients is formed on a glass sheet by a sol-gel process, the thus-formed metal oxide film is heated to be thereby separated into two phases, and then the film is subjected to etching by using hydrofluoric acid whereby the film is rendered porous due to difference in the etching rate of the two phases (see, for example, S.P. Mukherjee et al, J. Non-Cryst. Solids, Vol. 48, p177 (1982)), and a process wherein a composite film comprised of magnesium oxide and carbon dioxide is formed by a sol-gel process, and then, the thus-formed composite film is exposed to a fluorine-containing gas at a high temperature whereby oxygen is substituted by fluorine (see, for example, J.H. Simmons et al, J. Non-Cryst. Solids, Vol. 178, p166 (1994)).

A low reflective resin base material has been proposed in JP-A 2002-328, 202, which is made by a process wherein a surface of a resin base material is coated with a coating liquid containing at least one kind of organic silicon compound comprising an amino group-containing organic silicon compound, or its hydrolyzed product; the coating liquid is dried to form a primary film on the resin base material; and then a silicon dioxide film having a refractive index of not larger than 1.40 and having a rough surface is formed on the primary film. It is described in this patent publication that the films can be formed at a low temperature and at a time with enhanced adhesion onto the entire surface of the resin base material.

However, in the case when the low reflective resin base material described in the above-mentioned patent publication is applied to a liquid crystal display, the resulting liquid crystal display tends to exhibit poor visibility, i.e., small luminance, and a low contrast at light and dark displays. Therefore, improvement of these properties is eagerly desired.

Disclosure of the Invention

Problems to Be Solved by the Invention

In view of the foregoing, a primary object of the present invention is to provide an optical multilayer film characterized as exhibiting a low light reflection, a reduced glare and mirroring, an enhanced visibility, and, when it is used in a liquid crystal display, providing a liquid crystal display exhibiting an enhanced contrast at light and dark displays.

Means for Solving the Problems

Thus, in accordance with the present invention, there are provided the following optical multilayer films [1]

through [13] for a liquid crystal display.

[1] An optical multilayer film for a liquid crystal display comprising a hard coat layer and a low refractive index layer comprising aerogel, which layers are laminated, in this order, directly or with another intervening layer on one surface of a substrate film comprising a transparent resin, wherein the refractive index $n_H$ of the hard coat layer and the refractive index $n_L$ of the low refractive index layer satisfy the following three formulae [1], [2] and [3] ,

$$\text{Formula [1]} : n_L \leqq 1.37$$

$$\text{Formula [2]} : n_H \geqq 1.53$$

$$\text{Formula [3]} : (n_H)^{1/2} - 0.2 < n_L < (n_H)^{1/2} + 0.2.$$

[2] The optical multilayer film for a liquid crystal display as described in above [1], wherein the low refractive index layer is a cured film formed from a coating material composition comprising:

(i) fine hollow particles having a shell comprised of a metal oxide,
(ii) at least one hydrolysis product selected from:

(ii-1) a hydrolysis product (A) obtained by hydrolysis of a hydrolyzable organosilane represented by the following general formula (1):

$SiX_4$

where X is a hydrolyzable group, and
(ii-2) a copolymerization-hydrolysis product (B) obtained by hydrolysis and copolymerization of a hydrolyzable organosilane represented by the formula (1) with a hydrolyzable organosilane having a fluorine-substituted alkyl group or groups; and

(iii) a hydrolyzable organosilane (C) having water-repellent groups in its straight-chain structure, and having at least two silicon atoms in the molecule, each of which is bonded with an alkoxy group or alkoxy groups.

[3] The optical multilayer film for a liquid crystal display as described in above [2], wherein the water-repellent groups of the hydrolyzable organosilane (C) are represented by the following general formula (2) or (3):

General formula (2):

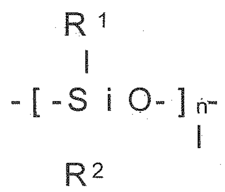

where $R^1$ and $R^2$ represents an alkyl group, and nis an integer of 2 to 200,

General formula (3): $-[-CF_2-]_m-$

where m is an integer of 2 to 20.

[4] The optical multilayer film for a liquid crystal display as described in above [1], wherein the low refractive index layer is a cured film formed from a coating material composition comprising:

(i) fine hollow particles having a shell comprised of a metal oxide,
(ii) at least one hydrolysis product selected from:

(ii-1) a hydrolysis product (A) obtained by hydrolysis of a hydrolyzable organosilane represented by the following general formula (1):

**$SiX_4$**

where X is a hydrolyzable group, and
(ii-2) a copolymerization-hydrolysis product (B) obtained by hydrolysis and copolymerization of a hydrolyzable organosilane represented by the formula (1) with a hydrolyzable organosilane having a fluorine-substituted alkyl group or groups; and

(iii) a dimethyl-type silicone diol (D) represented by the following general formula (4):

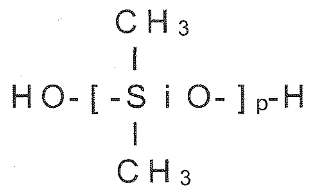

where p is a positive integer.
[5] The optical multilayer film for a liquid crystal display as described in above [4], wherein the positive integer p in the formula (4) is in the range of 20 to 100.
[6] The optical multilayer film for a liquid crystal display as described in above [1], wherein the low refractive index layer is a cured film formed from a coating material composition comprising:

(i) a re-hydrolyzed product obtained by subjecting a mixture comprising fine hollow particles having a shell comprised of a metal oxide, and a hydrolysis product (A) obtained by hydrolysis of a hydrolyzable organosilane represented by the following general formula (1):

**$SiX_4$**

where X is a hydrolyzable group, to a hydrolysis treatment whereby the hydrolysis product (A) is re-hydrolyzed; and
(ii) a copolymerization-hydrolysis product (B) obtained by hydrolysis and copolymerization of a hydrolyzable organosilane represented by the formula (1) with a hydrolyzable organosilane having a fluorine-substituted alkyl group or groups.

[7] The optical multilayer film for a liquid crystal display as described in any one of above [2] to [6], wherein the coating material composition for forming the cured film further comprises:

(a) porous particles, which are prepared by subjecting a mixture comprising an alkyl silicate, a solvent, water and a catalyst for hydrolysis and polymerization, to a hydrolysis-polymerization whereby the alkyl silicate is hydrolyzed and polymerized; and then removing the solvent by drying the hydrolysis-polymerization product; and/or
(b) porous particles having a cohesion average particle diameter in the range of 10 nm to 100 nm, which are prepared by subjecting a mixture comprising an alkyl silicate, a solvent, water and a catalyst for hydrolysis and polymerization, to a hydrolysis-polymerization whereby the alkyl silicate is hydrolyzed and polymerized; terminating polymerization before the polymerization mixture is gelled to give a stabilized organosilica sol; and then removing the solvent by drying the organosilica sol.

[8] The optical multilayer film for a liquid crystal display as described in above as described in any one of claims [2] to [6], wherein the hydrolysis product (A) comprises a partially or completely hydrolyzed product having a weight average molecular weight of at least 2,000 which is prepared by hydrolyzing the hydrolyzable organosilane of the formula (1) in the presence of water in amount such that the molar ratio of [$H_2O$] / [**X**] is in the range of 1.0 to 5.0

and further in the presence of an acid catalyst.

[9] The optical multilayer film for a liquid crystal display as described in any one of above [2] to [8], wherein the refractive index $n_H$ of the hard coat layer and the refractive index $n_L$ of the low refractive index layer satisfy the following three formulae [4], [5] and [6] ,

$$\text{Formula [4]} : 1.25 \leqq n_L \leqq 1.35$$

$$\text{Formula [5]} : n_H \geqq 1.55$$

$$\text{Formula [6]} : (n_H)^{1/2} - 0.15 < n_L < (n_H)^{1/2} + 0.15$$

[10] The optical multilayer film for a liquid crystal display as described in any one of above [2] to [9], which has a reflectivity of not larger than 0.7% at a wavelength of 550 nm and a reflectivity of not larger than 1.5% at a wavelength in the range of 430 nm to 700 nm.

[11] The optical multilayer film for a liquid crystal display as described in any one of above [2] to [10], wherein the substrate film has a die line with a depth or height of not larger than 0.1 μm.

[12] The optical multilayer film for a liquid crystal display as described in any one of above [2] to [11], wherein the transparent resin is selected from the group consisting of a polymer resin having an alicyclic structure, a cellulose resin and a polyester resin.

[13] The optical multilayer film for a liquid crystal display as described in any one of above [2] to [11], wherein the transparent resin is a polymer resin having an alicyclic structure.

## Effect of the Invention

The optical multilayer film provided in accordance with the present invention exhibits a low light reflection, a reduced glare and mirroring, an enhanced visibility, and, when it is used in a liquid crystal display, provides a liquid crystal display exhibiting an enhanced contrast at light and dark displays.

## Brief Description of the Invention

Fig. 1 is a cross-sectional view illustrating the multilayer structure of an optical multilayer film according to the present invention.

Fig. 2 is a cross-sectional view illustrating the multilayer structure of a polarizing film having an antireflection performance which has an optical multilayer film according to the present invention.

Fig. 3 is a cross-sectional view illustrating the multilayer structure of a polarizing film having an antireflection performance which has an optical multilayer film according to the present invention, and which is adhered on a liquid crystal display cell.

Fig. 4 is a cross-sectional view illustrating the layer structure of the liquid crystal display cell illustrated in Fig. 3.

## Explanation of Reference Numerals

11: Substrate film
21: High refractive index layer (hard coat layer)
31: Low refractive index layer
41: Antifouling layer
50: Optical multilayer film
61: Adhesive or self-adhesive layer

71: Polarizing film
81: Polarizing film having an antireflection performance
91: Polarizing film
92: Retardation film
93: Liquid crystal cell
94: Transparent electrode
95: Electrode substrate
96: Liquid crystal
97: Seal
98: Liquid crystal display element

Best Mode for Carrying Out the Invention

A transparent resin used for a substrate film of the optical multilayer film for a liquid crystal display according to the present invention exhibits a total luminous transmittance of at least 80% at a film thickness of 1 mm. The kind of the transparent resin is not particularly limited, and, as examples thereof, there can be mentioned polymers having an alicyclic structure, polyolefins such as polyethylene and polypropylene, polycarbonates, polyesters, polysulfones, polyether-sulfones, styrene polymers, polyvinyl alcohol, acyl-modified celluloses, polyvinyl chloride and polymethacrylates. These polymers may be used either alone or as a combination of at least two thereof.

Of the above-recited polymers, acyl-modified celluloses such as diacetyl cellulose, propionyl cellulose, triacetyl cellulose and butyryl cellulose; polyesters such as polyethylene terephthalate, polybutylene terephthalate and polyethylene naphthalate; and polymers having an alicyclic structure are preferable because of good transparency and small refractive index. Triacetyl cellulose, polyethylene terephthalate and polymers having an alicyclic structure are more preferable in view of good transparency and light-weight. Polyethylene terephthalate and polymers having an alicyclic structure are especially preferable because of enhanced dimensional stability and film-thickness controllability.

The polymers having an alicyclic structure include those which have an alycyclic structure on their backbone chain and/or branched chains. Of these, polymers having an alicyclic structure on the backbone chain are preferable because of high mechanical strengths and high heat resistance.

The alicyclic structure includes saturated alicyclic hydrocarbon structure (i.e., cycloalkane structure), and unsaturated alicyclic hydrocarbon structure (i.e., cycloalkene structure), and others. Of these, cycloalkane structure and cycloalkene structure are preferable in view of high mechanical strength and high heat resistance. Cycloalkane structure is most preferable. The number of carbon atoms in the alicyclic structure is not particularly limited, but the number of carbon atoms is usually in the range of 4 to 30, preferably 5 to 20, and more preferably 5 to 15. When the number of carbon atoms is in these ranges, the film exhibits good and well-balanced mechanical strength, heat resistance and film-forming property. The content of repeating units having an alicyclic structure in the polymers having an alicyclic structure can be appropriately chosen depending upon the particular use of the optical multilayer film, but the content thereof is preferably at least 30% by weight, more preferably at least 50% by weight, especially preferably at least 70% by weight and most preferably at least 90% by weight. When the base resin material used contains such a large amount of alicyclic structure, the substrate film has high transparency and high heat resistance.

The polymers having an alicyclic structure include, for example, (1) norbornene polymers, (2) monocyclic cycloolefin polymers, (3) cyclic conjugated diene polymers, (4) vinyl alicyclic hydrocarbon polymers, and hydrogenation products of these polymers. Of these, norbornene polymers are especially preferable because of enhanced transparency and shapability.

As specific examples of the norbornene polymers, there can be mentioned ring-opened polymers of norbornene monomers, ring-opened copolymers of norbornene monomers with other ring-opening copolymerizable monomers, and hydrogenation products of these ring-opened polymers and copolymers; and addition polymers of norborne monomers, and addition copolymers of norbornene monomers with other copolymerizable monomers. Of these, hydrogenation products of ring-opened polymers of norbornene monomers and hydrogenation products of ring-opened copolymers of norbornene monomers with other copolymerizable monomers are especially preferable because of excellent transparency.

The polymers having an alicyclic structure as used can be selected from those which are known to a person skilled in the art, as described in, for example, JP-A 2002-321302.

The transparent resin used for the substrate film preferably has a glass transition temperature of at least 80°C, more preferably in the range of 100°C to 250°C. The transparent resin having such a high glass transition temperature gives a substrate film exhibiting enhanced resistance to distortion or stress cracking at a high temperature, and having improved durability.

The transparent resin used for the substrate film usually has a weight average molecular weight (Mw) in the range of 10, 000 to 100,000, preferably 25,000 to 80,000 and more preferably 25,000 to 50,000, as measured by gel

permeation chromatography (hereinafter abbreviated to as "GPC") using cyclohexane as solvent(when the polymer is insoluble in cyclohexane, toluene is used instead) and expressed in terms of the Mw of polyisoprene or polystyrene. When the weight average molecular weight falls in this range, the substrate film has good and well-balanced mechanical strength, and shapability and processability.

The distribution of molecular weight of the transparent resin as expressed by the ratio of weight average molecular weight (Mw) to number average molecular weight (Mn) is not particularly limited, but is usually in the range of 1.0 to 10.0, preferably 1.0 to 4.0 and more preferably 1.2 to 3.5.

The substrate film used for an optical multilayer film according to the present invention may comprise additive ingredients in addition to the transparent resin. The additive ingredients include, for example, inorganic fine particles; stabilizers such as an antioxidant, a heat stabilizer, a light stabilizer, a weathering agent, an ultraviolet absorber and a near-infrared-rays stabilizer; resin modifiers such as a lubricant and a plasticizer; colorants such as a dye and a pigment; and an antistatic agent. These additive ingredients may be used either alone or as a combination of at least two thereof. The amount of additive ingredients can be appropriately chosen within the range in which the object of the present invention can be achieved, but, the amount thereof is usually in the range of 0 to 5 parts by weight, preferably 0 to 3 parts by weight, based on 100 parts by weight of the transparent resin.

The substrate film preferably has a thickness in the range of 30 to 300 μm, more preferably 40 to 200 μm in view of high mechanical strength and other good characteristics.

The thickness of the substrate film is preferably uniform. More preferably the fluctuation in film thickness is below 3% based on the average film thickness over the entire film width. When the film thickness fluctuation is below 3%, the adhesion of a hard coat layer and the surface smoothness of a low refractive index layer formed on the hard coat layer can be enhanced.

The die line of the substrate film preferably has a depth or height of not larger than 0.1 μm, more preferably not larger than 0.05 μm. By reduction of the depth or height of the die line, when the optical multilayer film according to the present invention is used as a polarizing film-protective film, a die line observed is minimized and visibility is greatly improved.

The die line can be measured by a non-contact three-dimensional surface configuration and roughness tester.

The content of volatile matter in the substrate film is preferably not larger than 0.1% by weight, more preferably not larger than 0.05% by weight. When the content of volatile matter is minimized, the substrate film has good dimensional stability and, when a hard coat layer is laminated, a laminate of uniform thickness can be obtained. In addition, a homogeneous low refractive index layer can be formed over the entire surface of film, and thus, the resulting antireflection effect can be uniform over the entire surface of film.

The volatile matter is substances having a molecular weight of not larger than 200 contained in a very minor amount in the substrate film. The volatile matter includes, for example, residual monomers and solvent. The content of volatile matter can be determined as the total amount of substances having a molecular weight of not larger than 200 by analysis of the substrate film according to gas chromatography.

The substrate film preferably has a saturated water absorption of not larger than 0.01% by weight, more preferably not larger than 0.007% by weight. When the saturated water absorption is larger than 0.01% by weight, the adhesion between the substrate film and a hard coat layer, and the adhesion between the hard coat layer and a low refractive index layer are reduced, and the adhered low refractive index layer is liable to be separated during the long-term use.

The saturated water absorption is determined by measuring the weight increase as immersed in water at 23°C for 1 week according to ASTM D530.

Either one surface or both surfaces of the substrate film can be modified to enhance the adhesion thereof to a hard coat layer. The surface modification includes, for example, an energy radiation treatment and a chemical treatment.

As specific examples of the energy radiation treatment, there can be mentioned a corona discharge treatment, a plasma treatment, an electron radiation treatment and an ultraviolet ray radiation treatment. In view of the irradiation efficiency, a corona discharge treatment and a plasma treatment are preferable. A corona discharge treatment is especially preferable.

A preferable chemical treatment comprises the step of immersing the substrate film in an aqueous potassium bichromate solution or an aqueous solution of an oxidizing agent such as concentric sulfuric acid, followed by thorough washing with water. When the substrate film is shaken during immersion in the aqueous solution, the immersion effect is enhanced. The treatment time can be appropriately chosen depending upon the particular reactivity and concentration of a chemical used or other conditions. When the time of the chemical treatment is too long, the surface of substrate film is undesirably dissolved and the transparency is reduced.

The substrate film can be formed by a solution-casting method or a melt-extrusion method. A melt-extrusion method is preferable because the content of volatile matter in the substrate film is reduced and the uniformity in thickness is enhanced. The melt-extrusion method includes a method using a T-die and an inflation method. A method using a T-die is especially preferable because of high productivity and high precision of film thickness.

In the melt-extrusion method using a T-die, the transparent resin is heated in an extruder with a T-die preferably at a melt temperature by 80-180°C higher than the glass transition temperature of the transparent resin, more preferably by 100-150°C higher than the glass transition temperature of the transparent resin. When the melting temperature is too low, the transparent resin has too low fluidity. In contrast, when the melting temperature is too high, the deterioration of resin tends to occurs.

The depth or height of a die line in the substrate film used according to the present invention can be 0.1 μm or lower, for example, by the following methods: (1) a method using a T-die having a die lip, a tip end portion of which is plated with chromium, nickel or titanium; (2) a method using a T-die having a die lip, the inner surface of which is lined with a coating film of TiN, TiAIN, TiC, CrN or DLC (diamond-like carbon), formed, for example, by PVD (physical vapor deposition); (3) a method using a T-die having a die lip, a tip end portion of which is thermally sprayed with other ceramic; and (4) a method using a T-die having a die lip, the surface of a tip end portion of which is nitrified.

The dies used in the above-mentioned methods have a hard surface and a low friction with a resin. Therefore, the undesirable incorporation of burned matter can be prevented and the depth or height of die line can be 0.1 μm or lower.

By using a die having a good surface precision, the uniformity of thickness can be more enhanced. The surface roughness concerned with microscopic roughness is expressed by the average height Ra. The inner surface of the die, especially the inner surface of a tip end portion of the die, preferably has an average height Ra of not larger than 0.2 μm, more preferably not larger than 0.1 μm.

By the term "average height Ra" as used herein, we mean an average value as determined by a determining method similar to the arithmetic mean height Ra as stipulated in JIS B601-2001. In the determining method, a curve to be evaluated is processed with a phase compensation high pass filter at a cut-off of 0.8 mm to draw a roughness curve, and a predetermined standard length is taken from the average line of the roughness curve. Absolute values of deviations from the roughness curve to the average line per the standard length are integrated, and an average value is calculated.

The depth or height of a die line in the substrate film used according to the present invention can be 0.1 μm or lower, for example, by other means. Such means include, for example, removal of, for example, burnt matter or foreign matter from a die lip; enhancement of releasability of resin film from a die lip; enhancement of uniformity in wettability over the entire surface of a die lip; minimization of the content of oxygen in resin pellets and/or the amount of powdery resin deposited on the pellets; and use of an extruder provided with a filter for resin.

The content of volatile matter in the substrate film can be reduced, for example, by the following means: (1) using a transparent resin having a reduced amount of volatile matter; (2) employing a melt-extrusion method for forming the substrate film; and (3) preliminarily drying a transparent resin before shaping the transparent resin. The preliminary drying can be carried out, for example, by heating pellets of a transparent resin by a hot air dryer. The heat-drying temperature is preferably at least 100°C and the heat-drying time is preferably at least two hours. By the preliminary drying, the content of volatile matter in the substrate film is reduced and undesirable foaming of the molten transparent resin occurring during melt extrusion can be prevented.

The hard coat layer in an optical multilayer film of the present invention is formed from a material having a hardness of at least 2H as measured by a pencil hardness testing method using a glass testing plate according to JIS K5600-5-4. The material used is not particularly limited provided that it has such a pencil hardness. As specific examples of the material, there can be mentioned organic hard coating materials such as an organic silicone resin, a melamine resin, an epoxy resin, an acrylic resin and a urethane-acrylate resin; and inorganic hard coating materials such as silicon dioxide. Of these, a urethane-acrylate resin and a polyfunctional acrylate resin are preferable because of high adhesion and high productivity.

In the present invention, to provide an optical multilayer film having a reduced light reflection and a good abrasion resistance, the refractive index $n_H$ of the hard coat layer, and the refractive index $n_L$ of the low refractive index layer, formed on the hard coat layer, must satisfy the following two formulae [2] and [3] ,

$$\text{Formula [2]}: n_H \geqq 1.53$$

$$\text{Formula [3]}: (n_H)^{1/2} - 0.2 < n_L < (n_H)^{1/2} + 0.2,$$

and preferably satisfy the following two [5] and [6] ,

$$\text{Formula [5]}: n_H \geqq 1.55$$

$$\text{Formula [6]}: (n_H)^{1/2} - 0.15 < n_L < (n_H)^{1/2} + 0.15$$

If desired, various fillers can be incorporated in the hard coat layer to modify the hard coat layer, for example, to control the refractive index, improve the flexural modulus, stabilize the volume shrinkage, and improve the heat resistance, antistatic property and antiglare property. The fillers include, for example, silica, alumina and hydrated alumina. Further, additives such as an antioxidant, a ultraviolet absorber, a light stabilizer, an antistatic agent, a leveling agent and a defoaming agent can be incorporated.

As preferable examples of the fillers for controlling the refractive index and antistatic property, there can be mentioned titanium oxide, zirconium oxide, zinc oxide, tin oxide, cerium oxide, antimony pentaoxide, tin-doped indium oxide (ITO), antimony-doped tin oxide (ATO), aluminum-doped zinc oxide (AZO) and fluorine-doped tin oxide (FTO). When these fillers are incorporated, the refractive index and antistatic property of the hard coat layer can be easily controlled. Of these, antimony pentaoxide, ITO, ATO, AZO and FTO are especially preferable because these do not influence or influence only to a negligible extent the transparency of film. These fillers have a primary particle diameter of at least 1 nm, and not larger than 100 nm, preferably not larger than 30 nm.

The fillers for imparting an antiglare property preferably include those which have an average particle diameter in the range of 0.5 to 10 μm, more preferably 1 to 7 μm. As specific examples of the antiglare-imparting fillers, there can be mentioned organic resin fillers such as a polymethyl methacrylate resin, a vinylidene fluoride resin and other fluororesins, a silicone resin, an epoxy resin, a nylon resin, a polystyrene resin, a phenol resin, a polyurethane resin, a crosslinked acrylic resin, a crosslinked polystyrene resin, a melamine resin and a benzoguanamine resin; and inorganic fillers such as titanium oxide, aluminum oxide, indium oxide, zinc oxide, antimony oxide, tin oxide, zirconium oxide, ITO, magnesium fluoride and silicon oxide.

The procedure for forming the hard coat layer is not particularly limited. The hard coat layer can be formed, for example, by a procedure wherein a substrate film is coated with a coating liquid for forming the hard coat layer by a conventional procedure, and then the coating is cured by heating or irradiation with ultraviolet rays.

The hard coat layer preferably has a thickness in the range of 0.5 to 30 μm, more preferably 3 to 15 μm. If the hard coat layer is too thin, it is difficult to prepare a multilayer having a layer or layers of a desired hardness, formed on the hard coat layer. In contrast, if the hard coat layer is too thick, the resulting optical multilayer film has poor flexibility, and it needs a substantially long time to cure the hard coat layer, and the production efficiency tends to be reduced.

The low refractive index layer of an optical multilayer film of the present invention is comprised of aerogel which is a transparent porous body having fine bubbles dispersed in a matrix. The predominant part of the fine bubbles have a diameter of not larger than 200 nm. The content of the bubbles is usually in the range of 10% to 60% by volume, preferably 20% to 40% by volume. The aerogel used is not particularly limited provided that the refractive index $n_L$ of the low refractive index layer satisfies the following formulae [1] and [3] ,

$$\text{Formula [1]}: n_L \leqq 1.37$$

$$\text{Formula [3]}: (n_H)^{1/2} - 0.2 < n_L < (n_H)^{1/2} + 0.2$$

wherein $n_H$ is a refractive index of the hard coat layer. Preferably the refractive index $n_L$ of the low refractive index layer satisfies the following formulae [4] and [6] ,

$$\text{Formula [4]}: 1.25 \leqq n_L \leqq 1.35$$

$$\text{Formula [6]}: (n_H)^{1/2} - 0.15 < n_L < (n_H)^{1/2} + 0.15$$

The low refractive index layer may be composed of a single layer or a multilayer. In the case when the low refractive index layer is composed of a multilayer, the layer of the multilayer adjacent to the hard coat layer should have a refractive index $n_L$ satisfying the above-mentioned formulae.

The low refractive index layer is preferably a cured film selected from the following [I], [II] and [III].

[I] A cured film formed from a coating material composition comprising:

(i) fine hollow particles having a shell comprised of a metal oxide,
(ii) at least one hydrolysis product selected from:

(ii-1) a hydrolysis product (A) obtained by hydrolysis of a hydrolyzable organosilane represented by the following general formula (1):

$$SiX_4$$

where X is a hydrolyzable group, and
(ii-2) a copolymerization-hydrolysis product (B) obtained by hydrolysis and copolymerization of a hydrolyzable organosilane represented by the formula (1) with a hydrolyzable organosilane having a fluorine-substituted alkyl group or groups; and

(iii) a hydrolyzable organosilane (C) having water-repellent groups in its straight-chain structure, and having at least two silicon atoms in the molecule, each of which is bonded with an alkoxy group or alkoxy groups.

[II] A cured film formed from a coating material composition comprising:

(i) fine hollow particles having a shell comprised of a metal oxide,
(ii) at least one hydrolysis product selected from:

(ii-1) a hydrolysis product (A) obtained by hydrolysis of a hydrolyzable organosilane represented by the following general formula (1):

$$SiX_4$$

where X is a hydrolyzable group, and
(ii-2) a copolymerization-hydrolysis product (B) obtained by hydrolysis and copolymerization of a hydrolyzable organosilane represented by the formula (1) with a hydrolyzable organosilane having a fluorine-substituted alkyl group or groups; and

(iii) a dimethyl-type silicone diol (D) represented by the following general formula (4):

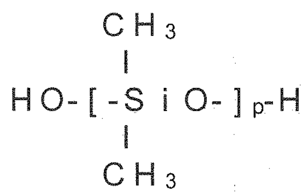

where p is a positive integer.

[III] A cured film formed from a coating material composition comprising:

(i) a re-hydrolyzed product obtained by subjecting a mixture comprising fine hollow particles having a shell comprised of a metal oxide, and a hydrolysis product (A) obtained by hydrolysis of a hydrolyzable organosilane represented by the following general formula (1):

$$SiX_4$$

where X is a hydrolyzable group, to a hydrolysis treatment whereby the hydrolysis product (A) is re-hydrolyzed; and

(ii) a copolymerization-hydrolysis product (B) obtained by hydrolysis and copolymerization of a hydrolyzable organosilane represented by the formula (1) with a hydrolyzable organosilane having a fluorine-substituted alkyl group or groups.

The coating material compositions used for forming the above-mentioned cured films [I], [II] and [III] constituting preferable low refractive index layers will be specifically described.

The coating material composition used for forming the cured film [I] comprises (ii) at least one hydrolysis product selected from the hydrolysis product (A) and the copolymerization-hydrolysis product (B), and (iii) the hydrolyzable organosilane (C). Thus, the coating material composition includes a combination of the hydrolysis product (A) with the hydrolyzable organosilane (C), a combination of the copolymerization-hydrolysis product (B) with the hydrolyzable organosilane (C), and a combination of the hydrolysis product (A), the copolymerization-hydrolysis product (B) with the hydrolyzable organosilane (C).

The hydrolysis product (A) is a tetrafunctional hydrolysis product (tetrafunctional silicone resin) obtained by hydrolysis of a tetrafunctional hydrolyzable organosilane represented by the following general formula (1):

$$SiX_4$$

where X is a hydrolyzable group. A preferable example of the tetrafunctional hydrolyzable organosilane is a tetrafunctional organoalkoxysilane represented by the following general formula (5):

$$Si(OR)_4$$

where R in the group of OR is a univalent hydrocarbon group. The univalent hydrocarbon group is not particularly limited, but preferably has 1 to 8 carbon atoms, and includes, for example, alkyl groups such as methyl, ethyl, propyl, butyl, pentyl, hexyl, heptyl and octyl groups. The OR group preferably includes alkoxy groups containing the above-recited alkyl groups R. Among the alkoxy groups, those which have at least 3 carbon atoms in each alkoxy group may be either linear chain-like such as n-propyl group and n-butyl group, or branched such as isopropyl group, isobutyl group and t-butyl group.

The hydrolysable group X in the tetrafunctional hydrolysable organosilane includes, in addition to the above-recited alkoxy groups, an acetoxy group, an oxime group (-O-N=C-R(R')), an enoxy group (-O-C(R)=C(R')R"), an amino group, an aminoxy group (-O-N(R)R') and an amide group (-N(R)-C(=O)-R') (in these groups, R, R' and R" independently represent, for example, a hydrogen atom or a univalent hydrocarbon group), and halogens such as chlorine and bromine.

The tetrafunctional silicone resin, i.e., the hydrolysis product (A) is prepared by hydrolyzing a tetrafunctional hydrolysable organosilane such as the above-mentioned organoalkoxy silane (the hydrolysis may be either completely or partially conducted). The molecular weight of the resulting tetrafunctional silicone resin (the hydrolysis product (A)) is not particularly limited, but the weight average molecular weight thereof is preferably in the range of 200 to 2,000, because a cured film having high mechanical strength can be obtained with a relatively small amount of a matrix-forming material to the amount of fine hollow particles such as fine hollow silica particles. When the weight average molecular weight is smaller than 200, the film-forming property tends to be poor. In contrast, when the weight average molecular weight exceeds 2, 000, the cured film tends to have poor mechanical strength.

The complete or partial hydrolysis of the tetrafunctional hydrolysable organosilane of the formula $SiX_4$ (X=OR where R is a univalent hydrocarbon group, preferably an alkyl group) such as tetraalkoxy silane is carried out in the presence of water in an amount such that the molar ratio $[H_2O]/[OR]$ is at least 1.0, usually in the range of 1.0 to 5.0 and preferably 1.0 to 3.0, and further preferably in the presence of an acid or base catalyst. Especially a partial or complete hydrolysis product obtained by the hydrolysis carried out in the presence of an acid catalyst is characterized in that a planar crosslinked structure is readily formed, and gives a dried cured film having an enhanced porosity. When the molar ratio $[H_2O]/[OR]$ is smaller than 1.0, the amount of unreacted alkoxy group becomes large, and a resulting cured film is liable to have a large refractive index. In contrast, when the molar ratio is larger than about 5.0, the rate of condensation reaction becomes rapid, a resulting coating material composition is occasionally gelled.

The conditions of hydrolysis may be appropriately chosen. For example, the above-mentioned materials can be mixed together and stirred for hydrolysis at a temperature of 5°C to 30°C for a period of 10 minutes to 2 hours. To obtain a hydrolyzed product having a molecular weight of at least 2,000 to give a matrix having a more reduced refractive index, the desired tetrafunctional silicone resin can be obtained by carrying out the hydrolysis reaction, for example, at a temperature of 40°C to 100°C for a period of 2 to 100 hours.

The copolymerization-hydrolysis product (B) is a copolymerized and hydrolyzed product obtained by hydrolysis and copolymerization of a hydrolyzable organosilane with a hydrolyzable organosilane having a fluorine-substituted alkyl group or groups;

The hydrolyzable organosilane used is a tetrafunctional hydrolysable organosilane represented by the above-mentioned formula (1), which preferably includes a tetravalent organoalkoxy silane represented by the above-mentioned formula (5).

As preferable examples of the hydrolyzable organosilane having a fluorine-substituted alkyl group or groups, those which have structural units represented by the following general formulae (7) to (9) are mentioned.

General formula (7):

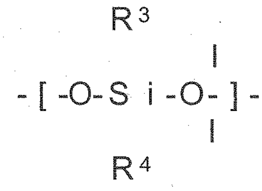

General formula (8):

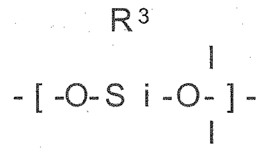

General formula (9):

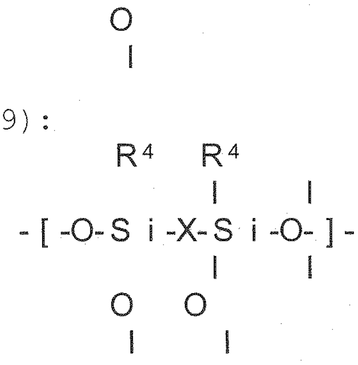

In the formulae (7) to (9), $R^3$ represents a fluoroalkyl group having 1 to 16 carbon atoms or a perfluoroalkyl group having 1 to 16 carbon atoms, and $R^4$ represents an alkyl, halogenated alkyl, aryl, alkylaryl, arylalkyl, alkenyl or alkoxy group, which has 1 to 16 carbon atoms; or a hydrogen or halogen atom; X represents $-C_aH_bF_c-$; a is an integer of 1 to 12, (b+c) is equal to 2a, b is an integer of 0 to 24, and c is an integer of 0 to 24. X preferably includes those which have a fluoroalkylene group or an alkylene group.

The copolymerization-hydrolysis product (B) is obtained by mixing together and copolymerizing the hydrolyzable organosilane with the hydrolyzable organosilane having a fluorine-substituted alkyl group or groups. The mixing ratio (copolymerization ratio) of the hydrolyzable organosilane to the hydrolyzable organosilane having a fluorine-substituted alkyl group or groups is not particularly limited, but, the ratio of the hydrolyzable organosilane to the hydrolyzable organosilane having a fluorine-substituted alkyl group or groups is preferably in the range of 99/1 to 50/50 as expressed by mass of the condensed compound. The weight average molecular weight of the copolymerization-hydrolysis product (B) is not particularly limited, but is preferably in the range of 200 to 5,000. When the weight average molecular weight is smaller than 200, the film-forming property becomes poor. In contrast, when the weight average molecular weight is larger than 5,000, a resulting cured film is liable to have poor mechanical strength.

The hydrolyzable organosilane (C) used in the present invention has water-repellent (i.e., hydrophobic) groups in its straight-chain structure, and has at least two silicon atoms in the molecule, each of which is bonded with an alkoxy group or alkoxy groups. This silicone alkoxide is preferably bonded to each end of the straight chain structure. The hydrolyzable organosilane (C) has two or more silicone alkoxides, and the number of upper limit of silicone alkoxide is not particularly limited.

The hydrolyzable organosilane (C) includes two types of organosiloxanes, one of which has a dialkylsiloxy

straight chain structure and the other of which has a fluorine-containing straight chain structure.

The hydrolyzable organosilane (C) having a dialkylsiloxy straight chain structure has a structural unit represented by the following general formula (2):

General formula (2):

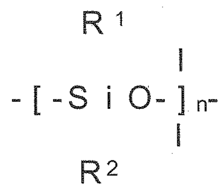

where $R^1$ and $R^2$ represents an alkyl group. The dialkylsiloxy straight chain structure preferably has a length such that n in the formula (2) is an integer of 2 to 200. When the integer n is 1, the dialkylsiloxy straight chain structure exhibits poor water repellency, and thus the effect of the hydrolyzable organosilane (C) having a dialkylsiloxy straight chain structure is not sufficiently manifested. In contrast, when the integer n is larger than 200, the hydrolyzable organosilane (C) tends to exhibit poor miscibility with other matrix-forming material, and a resulting cured film occasionally has poor transparency and poor uniformity in appearance.

The dialkylsiloxy straight chain of the hydrolyzable organosilane (C) is not particularly limited, provided that it is represented by the formula (2). As specific examples of the hydrolyzable organosilane (C), hydrolyzable organosilanes represented by the following formulae (10), (11) and (12) can be mentioned.

General formula (10):

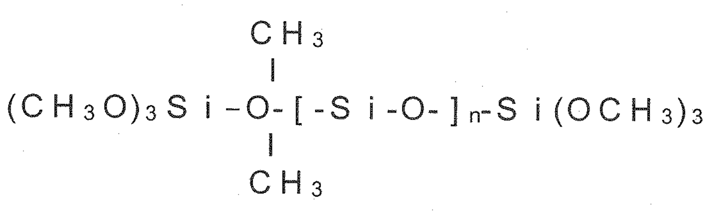

General formula (11):

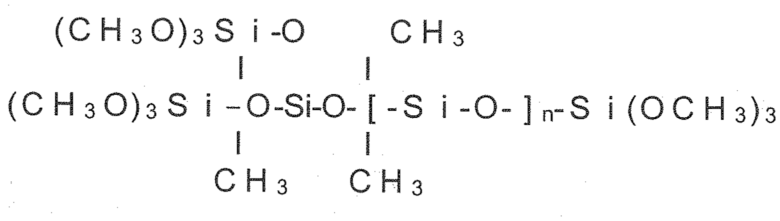

General formula (12):

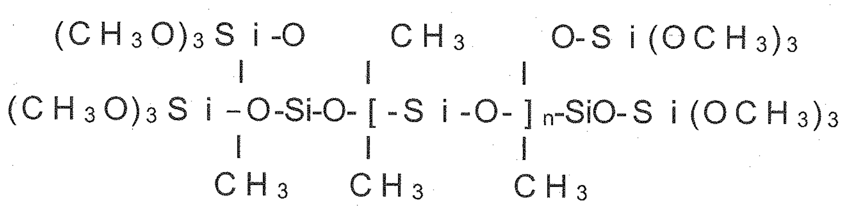

The hydrolyzable organosilane (C) having a fluorine-containing straight chain structure has a structural unit represented by the following general formula (3):

$$-[-CF_2-]_m-$$

The fluorine-containing straight chain structure preferably has a length such that m in the formula (3) is an integer of 2 to 20. When the integer m is 1, the straight chain structure exhibits poor water repellency, and thus the effect of the hydrolyzable organosilane (C) having a fluorine-containing straight chain structure is not sufficiently manifested. In contrast, when the integer m is larger than 20, the hydrolyzable organosilane (C) tends to exhibit poor miscibility with other matrix-forming material, and a resulting cured film occasionally has poor transparency and poor uniformity in appearance.

The hydrolyzable organosilane (C) having a fluorine-containing straight chain structure is not particularly limited, and, as specific examples thereof, those which are represented by the following formulae (13) through (16) can be mentioned.

General formula (13):

$$(CH_3O)_3Si-(CH_2)_2-(CF_2)_6-(CH_2)_2-Si(OCH_3)_3$$

General formula (14):

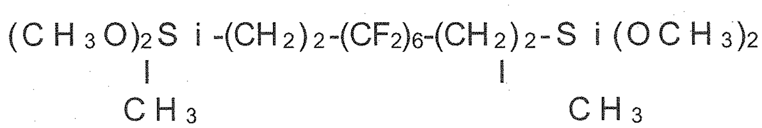

General formula (15):

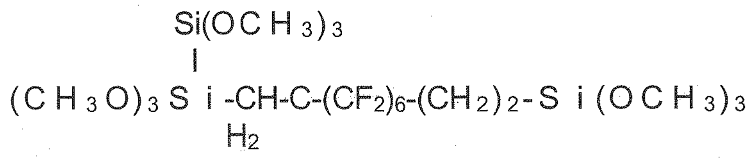

General formula (16):

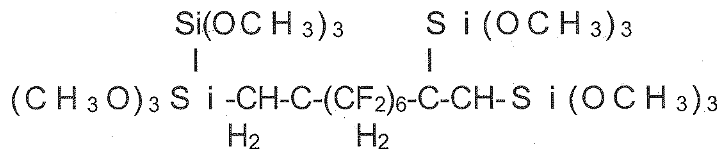

Of the above-mentioned hydrolyzable organosilanes (C) having a fluorine-containing straight chain structure, hydrolyzable organosilanes (C) having at least three silicon atoms having bonded thereto alkoxy groups, on the straight chain structure, such as those of formulae (15) and (16), are especially preferable. By at least three silicon atoms having bonded thereto alkoxy groups, on the straight chain structure, the water-repellent straight-chain structure is more firmly bonded to the surface of a cured film, therefore, the surface of cured film exhibits more enhanced water-repellency.

The matrix-forming material in the coating material composition for cured film [I] is formed by mixing together at least one of the above-mentioned hydrolysis product (A) and copolymerization-hydrolysis product (B) with the hydrolysable organosilane (C). The mixing ratio of the hydrolysis product (A) and/or the copolymerization-hydrolysis product

(B) to the hydrolysable organosilane (C) is not particularly limited, but, the ratio of [(A) and/or (B)]/(c) is preferably in the range of 99/1 to 50/50 by mass as expressed by the condensed compound.

The fine hollow particles having a shell comprised of a metal oxide, as used in the present invention, preferably includes fine hollow silica particles. The fine hollow silica particles are not particularly limited, provided that they have a structure such that each particle has a void within a shell comprising silica. The fine hollow silica particles as used herein refer to those which have a shell comprised of (i) a single silica layer, (ii) a single composite oxide layer which is composed of silica and an inorganic oxide other than silica, and (iii) a double layer comprised of the above-mentioned layers (i) and/or (ii). The shell may be a porous body having pores, and the pores may be closed by the procedures mentioned below to close the void inside each particle. A preferable shell is a double layer comprised of a first silica shell layer (inner silica shell layer) and a second silica shell layer (outer silica shell layer) . By the provision of the second silica shell layer, the pores in the shell can be clogged to form a densified shell and to close the void inside each particle.

The first silica shell layer preferably has a thickness in the range of 1 to 50 nm, especially preferably 5 to 20 nm. When the thickness of the first silica shell layer is smaller than 1 nm, it is often difficult to keep the shape of particle, and also difficult to give a stable fine hollow silica particle. Further, when the second silica shell layer is formed on the first silica shell layer, partially hydrolyzed product of an organic silicon compound tends to intrude into pores in a particle core and the particle core-constituting ingredient becomes difficult to remove. In contrast, when the thickness of the first silica shell layer is larger than 50 nm, the proportion of the void in the fine hollow silica particle is reduced and the refractive index often becomes difficult to lower to the desired extent.

The thickness of the shell is preferably in the range of 1/50 to 1/5 of the average particle diameter. The thickness of the second silica shell layer is preferably chosen so that the total thickness of the first silica shell layer and the second silica shell layer is in the range of 1 to 50 nm, especially preferably 20 to 49 nm to form a sufficiently densified shell.

The voids within the fine hollow silica particles are occupied by a solvent used for the preparation of the fine hollow silica particles and/or a gas intruding therein at drying step. Further, a precursor substance used for forming the voids may be present within the voids. In some cases, a small amount of the precursor substance remains in the voids in the state adhering onto the inner surface of shell, and, in the other cases, a large amount of the precursor substance occupies the predominant part of the voids.

The precursor substance used refers to a porous material which remains when a part of the ingredients constituting nucleus particles for forming the first silica shell layer is removed. The nucleus particles are porous composite oxide particles comprised of silica and an inorganic oxide other than silica. As specific examples of the inorganic oxide, there can be mentioned $Al_2O_3$, $B_2O_3$, $TiO_2$, $ZrO_2$, $SnO_2$, $Ce_2O_3$, $P_2O_5$, $Sb_2O_3$, $MoO_3$, $ZnO_2$ and $WO_3$. These inorganic oxides may be used alone or as a combination of at least two thereof. The combination of at least two inorganic oxides include, for example, $TiO_2$-$Al_2O_3$ and $TiO_2$-$2rO_2$.

The pores of the porous material for the precursor substance are also occupied by the above-mentioned solvent and/or gas. In the case when a large amount of the ingredients constituting the nucleus particles are removed, the volume of the voids increases to give fine hollow silica particles exhibiting a low refractive index. A transparent cured film prepared from a composition comprising the fine hollow silica particles exhibits a low refractive index and an enhanced antireflection performance.

The coating material composition used in the present invention can be prepared by mixing together the above-mentioned matrix-forming material with the fine hollow particles. The proportion of the fine hollow particles to the other ingredients is not particularly limited, but the ratio of the fine hollow particles/the other ingredients as solid matter is preferably in the range of 90/10 to 25/75 by weight, more preferably 75/25 to 35/65 by weight. The ratio of the fine hollow particles exceeds 90/10, a cured film made from the coating material composition is liable to have poor mechanical strength. In contrast, the ratio of the fine hollow particles smaller than 25/75, a cured film made from the coating material composition is liable to have an insufficiently reduced refractive index.

The coating material composition may have incorporated therein fine silica particles each having no void within a shell, in addition to the above-mentioned fine hollow silica particles. In the case when the fine silica particles having no void are incorporated, a cured film having enhanced mechanical strength, improved surface smoothness and enhanced crack resistance can be obtained. The shape of the fine silica particles having no void is not particularly limited, and, may be either powdery or sol-like. In the case when the fine silica particles having no void is sol, i.e., a colloidal silica, the sol is not particularly limited and may be either colloidal silica dispersed in water or colloidal silica dispersed in a hydrophilic organic solvent. In general, the colloidal silica comprises 20% to 50% by mass of silica as solid matter. Based on this solid silica content, the amount of silica used can be determined. The amount of the fine silica particles having no void is preferably in the range of 0.1% to 30% by mass based on the weight of the total solid content in the coating material composition. When the amount of the fine silica particles having no void is smaller than 0.1% by mass, the effect of the fine silica particles having no void is not sufficiently manifested. In contrast, when the amount of the fine silica particles having no void exceeds 30% by mass, a cured film has not sufficiently reduced refractive index.

The coating material composition for forming the cured film [II] comprises (i) fine hollow particles having a shell comprised of a metal oxide, (ii) at least one hydrolysis product selected from the hydrolysis product (A), mentioned

below, and the hydrolysis product (B), mentioned below, and (iii) the dimethyl-type silicone diol (D), mentioned below. Thus, the coating material composition includes a combination of the hydrolysis product (A) with the dimethyl-type silicone diol (D), a combination of the hydrolysis product (B) with the dimethyl-type silicone diol (D), or a combination of the hydrolysis product (A) and the hydrolysis product (B) with the dimethyl-type silicone diol (D).

The hydrolysis product (A) and the hydrolysis product (B) can be selected from the hydrolysis product (A) and the hydrolysis product (B) , respectively, which are used for the above-mentioned coating material composition for forming the cured film [I].

The dimethyl-type silicone diol (D) is a silicone diol of the dimethyl-type represented by the above mentioned formula (2). The number "n" of the repeating structural unit of dimethylsiloxane is usually in the range of 20 to 100. When the number "n" is smaller than 20, the effect of reducing the frictional resistance cannot be manifested to the desired extent, as mentioned below. In contrast, when the number "n" is larger than 200, the dimethyl-type silicone diol (D) tends to have poor miscibility with the other matrix material, and a resulting cured film is liable to have reduced transparency and poor uniformity in appearance.

In the coating material composition comprising the hydrolysis product (A), the hydrolysis product (B) and the silicone diol (D), the amount of the silicone diol (D) is not particularly limited, but is preferably in the range of 1 to 10% by mass based on the total solid content (which includes the sum of the fine hollow particles having a shell comprised of a metal oxide and the solid matter of the condensed product of the matrix-forming material) of the coating material composition.

The coating material composition used for forming the cured film [II] on the surface of a substrate film comprises the silicone diol as a part of the matrix-forming material, and, the cured film [II] containing the silicone diol exhibits a lowered frictional resistance. Thus, the surface of the cured film is smooth and is not readily marred, and exhibits an enhanced abrasion resistance. Especially the dimethyl-type silicone diol tends to be exposed on the surface of the cured film, and does not badly influence or influences only to a minimized extent the transparency of the cured film (that is, the haze value is very small).

The dimethyl-type silicone diol has a high miscibility with the other matrix material used in the present invention, and has reactivity with a silanol group in the matrix material and thus is readily fixed as a part of the matrix material on the surface of the cured film. This characteristic makes a striking contrast to that of conventional silicone oil further having methyl groups at both ends of the molecule chain, which is readily removed from the cured film surface when it is wiped. The cured film according to the present invention exhibits a reduced frictional resistance over a long period and its abrasion resistance is durable for a long period.

The coating material composition for forming the cured film [III] comprises (i) a re-hydrolyzed product obtained by subjecting a mixture of the hydrolysis product (A), mentioned below, with fine hollow particles having a shell comprised of a metal oxide, to a hydrolysis treatment whereby the hydrolysis product (A) is re-hydrolyzed (the re-hydrolyzed product is hereinafter referred to as "hydrolysis product (A)-containing re-hydrolized product" when appropriate); and (ii) a copolymerization- hydrolysis product (B), mentioned below. The hydrolysis product (A) is a hydrolysis product obtained by hydrolysis of a hydrolyzable organosilane represented by the following general formula (1):

$$\mathbf{SiX_4}$$

where X is a hydrolyzable group. The copolymerization-hydrolysis product (B) is obtained by hydrolysis and copolymerization of a hydrolyzable organosilane represented by the formula (1) with a hydrolyzable organosilane having a fluorine-substituted alkyl group or groups.

In other words, the above-mentioned coating material composition comprises fine hollow metal oxide particles and a matrix-forming material which comprises a re-hydrolyzed product (A) and the copolymerization-hydrolysis product (B).

The hydrolysis product (A) can be the same as the hydrolysis product (A) used for the above-mentioned coating material composition for forming the cured film [I].

The hydrolysis product (A)-containing re-hydrolyzed product as used herein is obtained by subjecting a mixture of the hydrolysis product (A) with fine hollow particles having a shell comprised of a metal oxide, to a hydrolysis treatment whereby the hydrolysis product (A) is re-hydrolyzed. When the mixture of the hydrolysis product (A) with fine hollow particles having a shell comprised of a metal oxide, to a hydrolysis treatment, the hydrolysis product (A) is reacted with the surface of the fine hollow metal oxide particles to form a chemical bond with the result of enhancing the miscibility of the hydrolysis product (A) with the fine hollow metal oxide particles.

The hydrolysis treatment of the mixture of the hydrolysis product (A) with the fine hollow metal oxide particles is preferably carried out at room temperature, i.e., a temperature of 20 to 30°C. When the temperature for hydrolysis is too low, the hydrolysis reaction does not proceed to a desired extent and the effect of enhancing the miscibility is insufficient. In contrast, when the temperature for hydrolysis is too high, the rate of hydrolysis reaction is too high, therefore, the molecular weight becomes difficult to control to a uniform value and the molecular weight becomes too

large to obtain a cured film of the desired high strength.

As a modification of the hydrolysis treatment of the mixture of the hydrolysis product (A) with the fine hollow metal oxide particles, a hydrolysis treatment of a mixture of a hydrolyzable organosilane of the formula (1) with the fine hollow metal oxide particles can be conducted to give a hydrolysis product (A) as well as a re-hydrolyzed product comprising a re-hydrolyzed product (A) with the fine hollow metal oxide particles.

The copolymerization-hydrolysis product (B) can be the same as the copolymerization-hydrolysis product (B) used for the above-mentioned coating material composition for forming the cured film [I].

The coating material composition for forming the cured film [III] can be said as comprising a matrix-forming material which is a mixture comprised of the re-hydrolyzed product (A) with the copolymerization-hydrolysis product (B), and a filler comprised of the fine hollow metal oxide particles. This coating material composition can be prepared by mixing together (i) the hydrolysis product (A) -containing re-hydrolyzed product (which is a mixture of re-hydrolyzed product (A) with the fine hollow metal oxide particles) with (ii) the copolymerization-hydrolysis product (B). The mixing ratio of the hydrolysis product (A)-containing re-hydrolyzed product to the copolymerization-hydrolysis product (B) is preferably in the range of 99/1 to 50/50 by mass. When the proportion of the copolymerization-hydrolysis product (B) is smaller than 1% by mass, the water repellency and oil repellency and the antifouling property cannot be sufficiently manifested. In contrast, when the proportion of the copolymerization-hydrolysis product (B) exceeds 50% by mass, the beneficial tendency of surface-exposition, mentioned below, of a layer of the copolymerization-hydrolysis product (B) above the layer of the hydrolysis product (A)-containing re-hydrolyzed product is reduced, and there is no great difference between the mixture of the hydrolysis product (A)-containing re-hydrolyzed product with the copolymerization-hydrolysis product (B), and a mixture of the hydrolysis product (A) with the copolymerization-hydrolysis product (B).

By subjecting a mixture of the hydrolysis product (A) with the fine hollow metal oxide particles to a hydrolysis treatment to re-hydrolyze the hydrolysis product (A), the affinity of the hydrolysis product (A) to the fine hollow metal oxide particles can be enhanced, and, when a substrate film is coated with the coating material composition comprising the hydrolysis product (A)-containing re-hydrolyzed product and the copolymerization-hydrolysis product (B) to form a coating film, there is a beneficial tendency of surface-exposition of a layer of the copolymerization-hydrolysis product (B) above the layer of the hydrolysis product (A)-containing re-hydrolyzed product.

The reason for which the above-mentioned beneficial tendency of the copolymerization-hydrolysis product (B) is not clear, but it is presumed that the hydrolysis product (A) exhibits enhanced affinity to the fine hollow metal oxide particles and is uniformly distributed in the film, whereas the copolymerization-hydrolysis product (B) does not exhibit good affinity to the fine hollow metal oxide particles and, when a substrate film is coated with the coating material composition comprising the hydrolysis product (A)-containing re-hydrolyzed product and the copolymerization-hydrolysis product (B) to form a coating film, the copolymerization-hydrolysis product (B) is liable to form a surface layer on the film to be thereby exposed on the surface of film. Especially when glass sheet is used as a substrate film, the glass sheet has poor affinity to the copolymerization-hydrolysis product and therefore the tendency of the copolymerization-hydrolysis product (B) forming a surface layer on the coating film becomes more marked. When the coating film having a surface layer is cured, the resulting cured film having the surface layer of the fluorine-containing copolymerization-hydrolysis product (A) exhibits high water repellency and high oil repellency and improved antifouling property due to the fluorine ingredients located on the surface layer of cured film.

Instead of or in addition to the fine hollow particles having a shell comprised of a metal oxide, which is incorporated in the coating material composition for forming the cured film for a low refractive index layer, the following porous particles can be used.

The porous particles used instead of or in addition to the fine hollow metal oxide particles include, for example, silica aerogel particles, composite aerogel particles such as silica/alumina aerogel particles, and organic aerogel particles such as melamine aerogel particles.

As specific and preferable examples of the porous particles, there can be mentioned:

(a) porous particles, which are prepared by subjecting a mixture comprising an alkyl silicate, a solvent, water and a catalyst for hydrolysis and polymerization, to a hydrolysis-polymerization whereby the alkyl silicate is hydrolyzed and polymerized; and then, removing the solvent by drying the hydrolysis-polymerization product; and/or

(b) porous particles having a cohesion average particle diameter in the range of 10 nm to 100 nm, which are prepared by subjecting a mixture comprising an alkyl silicate, a solvent, water and a catalyst for hydrolysis and polymerization, to a hydrolysis-polymerization whereby the alkyl silicate is hydrolyzed and polymerized; terminating polymerization before the polymerization mixture is gelled to give a stabilized organosilica sol; and then removing the solvent by drying the organosilica sol.

The above-mentioned porous particles may be used either alone or as a combination of at least two thereof.

The above-mentioned porous particles (a), which are prepared by hydrolysis-polymerization of alkyl silicate followed by drying for removal of solvent, are prepared by subjecting a mixture comprising an alkyl silicate (which is also

be called as alkoxysilane or silicon alkoxide), a solvent, water and a catalyst for hydrolysis and polymerization, to a hydrolysis-polymerization whereby the alkyl silicate is hydrolyzed and polymerized; and then, removing the solvent by drying the hydrolysis-polymerization product, as described in US patent 4,402,827; ibid. 4,432,956; and ibid. 4,610,863.

The drying of the hydrolysis-polymerization product is preferably carried out by a supercritical drying method. More specifically, an alkoxysilane is hydrolyzed and polymerized to give a gel-like compound having a silica backbone in a wet state, and the gel-like compound is dried in a solvent (i.e. , dispersion medium) such as an alcohol or liquid carbon dioxide in a supercritical state exceeding the critical point. The drying in a supercritical state can be carried out, for example, by immersing the wet gel-like compound in liquid carbon dioxide whereby a part or the whole of the solvent contained in the wet gel-like compound is substituted by liquid carbon dioxide having a critical point lower than that of the solvent, and then, the gel-like compound is dried in a single medium comprised of carbon dioxide or a mixed medium comprised of carbon dioxide and a solvent under supercritical conditions.

As described in JP-A H5-279011 and JP-A H7-138375, the wet gel-like compound produced by hydrolyzing and polymerizing an alkoxysilane in the above-mentioned processes are preferably treated so as to render hydrophobic the wet gel-like compound. The thus-produced hydrophobic silica aerogel is characterized in that moisture or water does not easily penetrate into the silica aero gel and therefore the refractive index and light transmittance of silica aerogel are not deteriorated.

The treatment for imparting a hydrophobic property to the silica aerogel can be conducted before or during the drying under supercritical conditions. This treatment of imparting a hydrophobic property involves a reaction of hydroxyl groups in the silanol groups present on the surface of gel-like compound with functional groups of a hydrophobicity-imparting agent whereby the hydroxyl groups are substituted by the functional groups of the hydrophobicity-imparting agent. The procedure for hydrophobicity-imparting treatment comprises, for example, immersing the gel-like compound in a solution of the hydrophobicity-imparting agent in a solvent, and stirring the mixed solution so that the gel-like compound is impregnated with the hydrophocity-imparting agent, and then, if desired, the gel-like compound is heated, whereby a hydrophobicity-imparting reaction of substituting hydroxyl groups by hydrophobic functional groups is caused.

The solvent used for the hydrophobicity-imparting treatment includes, for example, methanol, ethanol, isopropanol, xylene, toluene, benzene, N,N-dimethylformamide and hexamethyldisiloxane. The solvent used in not particularly limited provided that the hydrophobicity-imparting agent is easily soluble in the solvent, and a solvent contained in the gel-like compound is capable of being substituted by the solvent.

The drying under supercritical conditions is carried out in a medium in which the supercritical drying can easily be effected, which includes, for example, methanol, ethanol, isopropanol and liquid carbon dioxide, and those which are capable of being substituted by these solvents.

As specific examples of the hydrophobicity-imparting agent, there can be mentioned hexamethyldisilazane, hexamethyldisiloxane, trimethylmethoxysilane, dimethyldimethoxysilane, methyltrimethoxysilane, ethyltrimethoxysilane, trimethylethoxysilane, dimethyldiethoxysilane and methyltriethoxysilane.

The silica aerogel particles can be prepared by pulverizing a dry bulk of silica aerogel. It is to be noted, however, that the cured film according to the present invention should have an antireflection performance, and therefore, the cured film should be thin, i.e., have a thickness of about 100 nm and thus the aerogel particles should have a particle diameter of about 50 nm. The aerogel particles having a particle diameter of about 50 nm are usually difficult to prepare. When aerogel particles having a larger particle diameter are used, a cured film having a uniform thickness and a reduced surface roughness smoothness is difficult to obtain.

Other preferable porous particles are porous particles (b) having a cohesion average particle diameter in the range of 10 nm to 100 nm, which are prepared by subjecting a mixture comprising an alkyl silicate, a solvent, water and a catalyst for hydrolysis and polymerization, to a hydrolysis-polymerization whereby the alkyl silicate is hydrolyzed and polymerized; terminating polymerization before the polymerization mixture is gelled to give a stabilized organosilica sol; and then removing the solvent by drying the organosilica sol.

The above-mentioned porous particles (b) include, for example, fine silica aerogel particles which are prepared by the following method. First, a mixture comprising an alkyl silicate, a solvent, water and a catalyst for hydrolysis and polymerization is subjected to a hydrolysis-polymerization whereby the alkyl silicate is hydrolyzed and polymerized to give an organosilica-sol. The solvent used includes, for example, alcohols such as methanol. The catalyst for hydrolysis and polymerization includes, for example, ammonia. The organosilica-sol is diluted with the solvent or the pH of the organosilica-sol is adjusted, whereby the polymerization is terminated before the polymerization mixture is gelled. Thus a stabilized organosilica-sol having controlled polymer particle diameters is obtained.

Dilution of the organosilica-sol with the solvent to give the stabilized organosilica-sol can be carried out, for example, by using a solvent capable of easily and uniformly dissolving the organosilica sol, which is used for the preparation of the organosilica-sol and includes, for example, ethanol, 2-propanol or acetone, with a dilution ratio of at least 2/1. If the solvent used for the preparation of the organosilica-sol is an alcohol and the solvent used for dilution of the organo-silica-sol is an alcohol, the two alcohols are not particularly limited, but preferably, the alcohol used for the dilution of the organosilica-sol has a carbon number more than that of the alcohol used for the preparation of the organosilica-sol. This is because the hydrolysis-polymerization reaction can be desirably controlled with a dilution of the organosilica-sol due to the substitution of the alcohol with fewer carbon atoms by the alcohol with more carbon atoms.

Adjustment of the pH of the organosilica-sol to give the stabilized organosilica-sol can be carried out, for example, by adding an acid, when the catalyst for hydrolysis and polymerization is an alkali, or adding an alkali, when the catalyst for hydrolysis and polymerization is an acid, to the organosilica-sol so as to convert the pH of the organosilica-sol to a weakly acidic value. A suitable weakly acidic value varies depending upon the kind of solvent and the amount of water, which are used for the preparation of the organosilica-sol, but a preferable pH value is in the range of 3 to 4. For example, when ammonia is used as a catalyst for hydrolysis and polymerization, nitric acid or hydrochloric acid is added to the organosilica-sol so as to adjust the pH value to a value in the range of 3 to 4. When nitric acid is used as a catalyst for hydrolysis and polymerization, a weak alkali such as ammonia or sodium hydrogen carbonate is added to the organosilica-sol so as to adjust the pH value to a value in the range of 3 to 4.

The method for preparing a stabilized organosilica-sol, including the above-mentioned dilution of the organosilica-sol with a solvent, or the above-mentioned pH-adjustment, is not particularly limited, but, a combination of the dilution of the organosilica-sol with a solvent, with the pH-adjustment is preferable.

When the organosilica-sol is diluted with a solvent or its pH value is adjusted to prepare a stabilized organosilica-sol, an organic silane compound such as hexamethyldisilazane or trimethylchlorosilane can be added to conduct a treatment for rendering hydrophobic the fine silica aerogel particles. By this hydrophobicity treatment, the hydrolysis-polymerization reaction can be more controlled.

By directly drying the organosilica-sol, fine porous silica aerogel particles can be obtained. The porous silica aerogel particles preferably have a cohesion average particle diameter in the range of 10 nm to 100 nm. If the cohesion average particle diameter of particles exceeds 100 nm, a cured film having a uniform thickness and a reduced surface roughness becomes difficult to obtain. In contrast, if the cohesion average particle diameter of particles is smaller than 10 nm, when the porous silica aerogel particles are mixed together with the matrix-forming material to prepare a coating material composition; the matrix-forming material tends to penetrate into the silica aerogel particles with the result that a resulting dry film has poor porosity.

In a specific and preferable method for drying the organosilica-sol to give fine porous silica aerogel particles, the organosilica-sol is filled in a high-pressure vessel and the solvent inside the porous silica aerogel particles is substituted by liquid carbon dioxide, the content in the vessel is maintained at a temperature of at least 32°C and a pressure of at least 8 MPa, and then the inner pressure is reduced.

Another method of controlling the growth by polymerization of the organosilica-sol (other than the above-mentioned dilution method using a solvent or the above-mentioned pH adjustment method) includes, for example, addition of an organic silane compound such as hexamethyldisilazane or trimethylchlorosilane to stop the polymerization reaction. This method of adding an organic silane compound is beneficial especially in that the control of the growth by polymerization of the organosilica-sol and the hydrophocity treatment for rendering the organosilica-sol hydrophobic can be simultaneously attained.

When the cured film having an antireflection performance is formed according to the present invention, a high transparency (specifically a haze value of 0.2% or lower) is required. For satisfying this requirement, the silica aerogel particles are preferably added in the form of a uniform dispersion in a solvent to the matrix-forming material to prepare the coating material composition. More specifically, an alkyl silicate is first mixed with a solvent such as methanol, water, and an alkaline catalyst for hydrolysis and polymerization, and the mixture is subjected to hydrolysis-polymerization treatment whereby the alkyl silicate is hydrolyzed and polymerized to give an organosilica-sol. Then, before the organosilica-sol becomes gel, the organosilica-sol is diluted with a solvent or the pH value of the organosiica-sol is adjusted, as mentioned above, whereby the growth of the organosilica-sol particles is controlled and the organosilica-sol is stabilized. The thus-stabilized organosilica-sol can be added as a silica aerogel dispersion to the matrix-forming material to prepare the coating material composition used in the present invention.

The silica aerogel particles in the organosilica-sol have a cohesion average particle diameter in the range of 10 nm to 100 nm. If the cohesion average particle diameter of particles exceeds 100 nm, a cured film having the desired properties becomes difficult to obtain. In contrast, if the cohesion average particle diameter of particles is smaller than 10 nm, when the silica aerogel particles are mixed together with the matrix-forming material to prepare a coating material composition, the matrix-forming material tends to penetrate into the silica aerogel particles with the result that a resulting dry film has poor porosity. When the cohesion average particle diameter is at least 10 nm, the undesirable penetration of the matrix-forming material into the porous silica aerogel particles can be prevented or minimized.

When the coating film on a substrate film is dried, the solvent is removed to give porous silica aeogel particles.

The content of the porous aerogel particles in the coating material composition used according to the present invention is not particularly limited, but the content is preferably in the range of 5% to 80% by mass based on the solid content of the coating material composition. When the content of the porous aerogel particles is smaller than 5% by mass, the effect of reducing the refractive index of the cured film for the purpose of antireflection is liable to be insufficient. In contrast, when the content of the porous aerogel particles exceeds 80% by mass, a uniform and transparent cured

film becomes difficult to make. The content of the porous aerogel particles in the coating material composition is more preferably in the range of 20% to 50% by mass based on the solid content of the coating material composition. When the content of the porous aerogel particles is within this range, a film strength giving a suitable handling characteristic and good refractive index-reducing effect can be obtained. These beneficial properties are practically important for the film-forming property as well as the mechanical strength and appearance of film.

By using the above-mentioned coating material composition, the desired effect of reducing the refractive index of the cured film for the purpose of antireflection can be attained. For example, in the case when a substrate film having a refractive index of not larger than 1.60 is used, it is preferable that a cured film having a refractive index of at least 1.60 is formed as an intermediate layer on the substrate film, and further, a cured film is formed from the above-mentioned coating material composition on the intermediate layer. The cured film as the intermediate layer can be formed from the conventional high-refractive index material. When the intermediate layer has a high refractive index of at least 1.60, the difference in refractive index between the cured film formed from the above-mentioned coating material composition according to the present invention and the cured film as the intermediate layer becomes large, and an antireflection multilayer film having excellent antireflection performance can be obtained. To minimize the undesirable coloration of the cured film in the antireflection multilayer film, the intermediate layer can be formed from two or more intermediate cured films having different refractive indexes instead of the single intermediate cured film.

The low refractive index layer used in the present invention preferably has a thickness in the range of 10 to 1,000 nm, preferably 30 to 500 nm. The low refractive index layer is comprised of at least one layer as mentioned above, and it may be comprised of two or more layers.

In the optical multilayer film for liquid crystal display of the present invention, the refractive index $n_H$ of the hard coat layer and the refractive index $n_L$ of the low refractive index layer must satisfy the following three formulae [1] , [2] and [3] ,

$$\text{Formula [1]} : n_L \leqq 1.37$$

$$\text{Formula [2]} : n_H \geqq 1.53$$

$$\text{Formula [3]} : (n_H)^{1/2} - 0.2 < n_L < (n_H)^{1/2} + 0.2.$$

Preferably the refractive index $n_H$ of the hard coat layer and the refractive index $n_L$ of the low refractive index layer satisfy the following three formulae [4] , [5] and [6] ,

$$\text{Formula [4]} : 1.25 \leqq n_L \leqq 1.35$$

$$\text{Formula [5]} : n_H \geqq 1.55$$

$$\text{Formula [6]} : (n_H)^{1/2} - 0.15 < n_L < (n_H)^{1/2} + 0.15.$$

When the above-recited formulae are satisfied, the resulting optical multilayer film having a low reflectivity and thus an optical product having good visibility, good abrasion resistance and high strength can be obtained.

The optical multilayer film of the present invention preferably has a reflectivity of not larger than 0.7% at a wavelength of 550 nm and a reflectivity of not larger than 1.5% at a wavelength in the range of 430 nm to 700 nm. More preferably the optical multilayer film has a reflectivity of not larger than 0.6% at a wavelength of 550 nm and a reflectivity of not larger than 1.4% at a wavelength in the range of 430 nm to 700 nm.

The optical multilayer film of the present invention has a multilayer structure as illustrated, for example, in Fig. 1. The optical multilayer film 50 is comprised of a substrate film 11, a hard coat layer 21, a low refractive index layer 31 and an anti-fouling layer 41, arranged in this order from the bottom.

The optical multilayer film 50 of the present invention can have another intervening layer between the substrate film 11 and the hard coat layer 21. The optional intervening layer can be a primer layer (not shown).

The primer layer has a function of imparting adhesion to or enhancing adhesion between the substrate film and the hard coat layer. The primer layer is made of materials such as a polyester-urethane resin, a polyether-urethane resin, a polyisocyanate resin, a polyolefin resin, a resin having a hydrocarbon backbone and/or polybutadiene backbone, a polyamide resin, an acylic resin, a polyester resin, a vinyl chloride-vinyl acetate copolymer, chlorinated rubber, cyclized rubber, and modified rubbers prepared by introducing a polar group in the above-recited rubbers. Of these, the modified resin prepared from a resin having a hydrocarbon backbone and/or polybutadiene backbone, and the modified resin prepared from cyclized rubber are preferable.

The resin having a hydrocarbon backbone and/or polybutadiene backbone includes a resin having a polybutadiene backbone or a backbone composed of at least partially hydrogenated polybutadiene. As specific examples of the resin, there can be mentioned a polybutadiene resin, a hydrogenated polybutadiene resin, and a styrene-butadiene-styrene block copolymer (SBS copolymer) and a hydrogenation product of the block copolymer (i.e., SEBS copolymer). An especially preferable resin is a modified resin of the hydrogenation product of styrene-butadiene-styrene block copolymer.

The polar group to be introduced into the resin for modification is preferably derived from a carboxylic acid or its derivatives. As specific examples of the carboxylic acid or its derivatives, there can be mentioned unsaturated carboxylic acids such as acrylic acid, methacrylic acid, maleic acid and fumaric acid; and halides, amides, imides, anhydrides and esters of unsaturated carboxylic acids such as maleyl chloride, maleimide, maleic anhydride and citraconic anhydride. A resin modified with an unsaturated carboxylic acid or an hydride thereof is preferable because of good adhesion. Acrylic acid, methacrylic acid, maleic acid and maleic anhydride are more preferable. Maleic acid and maleic anhydride are especially preferable. These unsaturated carboxylic acids and derivatives thereof may be used as a combination of at least two thereof.

The procedure for forming the primer layer is not particularly limited, and includes, for example, a conventional procedure of coating the surface of a substrate film with a primer-forming coating liquid to form a coating on the substrate film.

The thickness of primer layer is not particularly limited and is usually in the range of 0.3 to 5 μm and preferably 0.5 to 2 μm.

The optical multilayer film of the present invention can have, if desired, an anti-fouling layer (shown as numeral 41 in Fig. 1) on the low refractive index layer to protect the low refractive layer and imparts an anti-fouling performance to the optical multilayer film.

The material for use in the anti-fouling layer is not particularly limited, provided that it does not exert a baneful influence on the refractive index layer and has an anti-fouling performance. The anti-fouling layer-forming material preferably includes compounds having a hydrophobic group, and, as specific examples thereof, there can be mentioned a perfluoroalkylsilane compound, a perfluropolyethersilane compound and a fluorine-containing silicone compound.

The method for forming the anti-fouling layer can be appropriately chosen depending upon the particular material used, and it includes, for example, physical vapor-phase growth methods such as vapor deposition method and sputtering method, chemical vapor growth methods such as CVD, and wet-coating methods. The thickness of the anti-fouling layer is not particularly limited, but is preferably not larger than 20 nm and more preferably in the range of 1 to 10 nm.

The optical multilayer film of the present invention has good optical properties and low reflectivity, and therefore, it is suitable for an anti-reflective protection film of optical parts of a liquid crystal display.

An anti-reflective protective film is usually provided in optical parts of a liquid crystal display for preventing or minimizing the reduction of contrast and glare and mirroring due to reflection of light. The anti-reflective protective film is usually provided for an optical part arranged as the uppermost layer on the viewing side of a liquid crystal display.

The optical multilayer film of the present invention is used as an optical element, for a antireflective protective film, especially preferably as a protective film for a polarizer in a liquid crystal display.

The polarizing film provided with the optical multilayer film having an antireflection function according to the present invention is characterized as comprising the optical multilayer film of the present invention, and a polarizing film laminated on the surface of a substrate film of the optical multilayer film, which surface is opposite to the surface on which the low refractive index layer is formed. For example, as illustrated in Fig. 2, the polarizing film having an antireflection performance 81 has a multilayer structure such that the optical multilayer film 50 is laminated via an adhesive or self-adhesive layer 61 on the upper side of the polarizing film 71.

The polarizing film which can be used in the present invention is not particularly limited provided that it has a polarizing function. As specific examples of the polarizing film, there can be mentioned those which are made of polyvinyl alcohol (PVA) or a polyene.

The polarizing film used in the present invention preferably has a polarization percentage of at least 99.9%, more preferably at least 99.95%. The polarization percentage is determined as follows. Two polarizing films are superposed in a manner such that the polarizing axes are in parallel and a light transmittance ($H_0$) of the superposed films is measured. Two polarizing films are superposed in a manner such that the polarizing axes are perpendicular to each other and a light transmittance ($H_{90}$) of the superposed films is measured. The measurement of light transmittance is carried out according to JIS Z8701 using a C light source at a visual field of 2 degrees by using a spectrophotometer. The polarization percentage is calculated from the following equation. The $H_{90}$ and $H_{90}$ are values as corrected depending upon the visual sensitivity.

$$\text{Polarization percentage (\%)} = [(H_0 - H_{90})/(H_0 + H_{90})]^{1/2} \times 100$$

The process for producing the polarizing film is not particularly limited, and the polarizing film can be produced by a conventional process. For example, the process for producing a polyvinyl alcohol (PVA) polarizing film includes a process wherein a PVA film is allowed to adsorb an iodine ion, and then uniaxially stretched; a process wherein a PVA film is uniaxially stretched and then allowed to adsorb an iodine ion; a PVA film is allowed to absorb an iodine ion and simultaneously niaxially stretched; a process wherein a PVA film is dyed with a dichroic dye and then uniaxially stretched; a process wherein a PVA film is uniaxially stretched and then dyed with a dichroic dye; and a process wherein a PVA film is dyed with a dichroic dye and simultaneously uniaxially stretched. The process for producing a polyene polarizaing film includes a process wherein a PVA film is uniaxially stretched and then heated in the presence of a dehydrating catalyst to be thereby dehydrated; and a process wherein a polyvinyl chloride film is uniaxially stretched and then heated in the presence of a dehydrochlorination catalyst to be thereby dehydrated.

The polarizing film having an antireflection function can be produced by laminating the polarizing film on the surface of a substrate film in the optical multilayer film of the present invention, which surface is opposite to the surface on which the low refractive index layer is formed.

The lamination of the polarizing film with the substrate film can be carried out by adhering together by an appropriate means using an adhesive or a self-adhesive. The adhesive or self-adhesive includes, for example, an acrylic adhesive, a silicone adhesive, a polyester adhesive, a polyurethane adhesive, a polyether adhesive and a rubber adhesive. Of these, an acrylic adhesive is preferable because of high heat resistance and good transparency.

The polarizing film having an antireflection function of the present invention has a multilayer structure as illustrated, for example, in Fig. 2. The polarizing film 81 illustrated in Fig. 2 is comprised of the optical multilayer film of the present invention 50, and a polarizing film 71. The polarizing film 71 is laminated through an adhesive or self-adhesive layer 61 on the surface of a substrate film 11 of the optical multilayer film 50, which surface is opposite to the surface on which the low refractive index layer 31 is formed.

The polarizing film provided with the optical multilayer film having an antireflection function according to the present invention may have another protective film (not shown in Fig. 2) which is laminated on the surface of the polarizing film 71, which surface is opposite to the surface on which the substrate film 11 is adhered through an adhesive or self-adhesive layer 61. The protective film is preferably made of a material having a low anisotropy. The material having a low anisotropy is not particularly limited, and includes, for example, cellulose esters such as triacetyl cellulose and a polymer resin having an alicyclic structure. A polymer resin having an alicyclic structure is especially preferable because of good transparency, low birefringence and good dimensional stability. As examples of the polymer resin having an alicyclic structure, there can be mentioned those which are recited above with respect to the substrate film of the optical multilayer film.

As examples of the adhesive or self-adhesive, there can be mentioned those which are recited above with respect to the adhesion between the protective film for the polarizing film, and the substrate film. The thickness of the polarizing film having an antireflection function of the present invention is not particularly limited, but is usually in the range of 60 $\mu$m to 2 mm.

The liquid crystal display element provided with the polarizing film with the optical multilayer film having an antireflection function according to the present invention, as one example of the optical product provided with the polarizing film having an antireflection function of the present invention, has a multilayer structure as illustrated in Fig. 3. The liquid crystal display element 98 illustrated in Fig. 3 is comprised of a polarizing film 91, a retardation film 92, a liquid crystal cell 93 and the polarizing film 81 with the optical multilayer film having an antireflection function according to the present invention, disposed in this order from the bottom.

The liquid crystal display element 98 is made by laminating on one surface of the liquid crystal cell 93 the polarizing film 81 with the optical multilayer film having an antireflection function, and further laminating on the other

surface of the liquid crystal cell 93 a lower side polarizing film 91 via a retardation film 92.

The polarizing film 81 having an antireflection function is laminated on the liquid cell 93 through an adhesive or self-adhesive (not shown) so that the polarizing plane confronts to the liquid crystal cell. The liquid crystal display element 98 is fixed to a plastic frame to give shape retention to the liquid crystal display element 98.

The liquid crystal cell 93 has, for example, a structure as illustrated in Fig. 4, wherein two electrode substrates 95 each provided with a transparent electrode 94 are disposed at a predetermined space in a fashion such that the two transparent electrodes 94 confront each other. The transparent electrodes have a polarizing film. A liquid crystal 96 is inserted in the predetermined space between the transparent electrodes 94. Both end portions of the liquid crystal 96 are sealed with seals 97.

For the formation of the liquid crystal display, one additional layer or two or more additional layers may be disposed in addition to the above-mentioned layers. Such additional layers include, for example, a luminance-enhancing film, a prism array sheet, a lens array sheet, a light guide plate, a light diffusion plate and a subsurface illuminator.

The mode of the liquid crystal 96 is not particularly limited, and, as specific examples of the liquid crystal mode, there can be mentioned TN (Twisted Nematic) type mode, an STN (Super Twisted Nematic) type mode, an HAN (Hybrid Alignment Nematic) type mode, an MVA (Multiple Vertical Alignment) type mode, an IPS (In Plane Switching) type mode and an OCB (Optical Compensated Bend) type mode.

The liquid crystal display apparatus 98 illustrated in Fig. 3 can be used as normally white mode giving bright indication and dark indication at a low voltage and a high voltage, respectively, and as normally black mode giving dark indication and bright indication at a low voltage and a high voltage, respectively.

The liquid crystal display provided with an optical multilayer film according to the present invention has a polarizing film having an antireflection function, which is characterized in that a low light reflection can be attained over a wide band width. Therefore, the liquid crystal display exhibits good visibility (i.e., glare and mirroring are prevented or minimized) and high contrast between darkness and brightness indications.

## Examples

The invention will now be described by the following examples that by no means limit the scope of the present invention. In the examples, parts are by weight unless otherwise specified.

The physical properties were evaluated by the following methods in the examples.

(1) Thickness (Datum Thickness, Thickness Fluctuation) in Substrate Film

A film was cut at a width of 100 mm in the lengthwise direction. Thickness was measured on the cut film using a contact type web thickness measurement apparatus ("RC-101" available from Meisan Corporation). The measurement was conducted on measurement points at intervals of 0.48 mm along a line extending in the transverse direction of the cut film. The arithmetic mean value of thickness data is datum film thickness T (μm). The fluctuation of film thickness is calculated from the following equation.

$$\text{Film thickness fluctuation (\%)} = (T_{max} - T_{min})/T \times 100$$

where $T_{max}$ is the maximum value (μm) of thickness and the $T_{min}$ is the minimum value (μm) of thickness.

(2) Volatile Content (% by weight) in Substrate Film

Water and organic matter, adsorbed on a glass tube having an inner diameter of 4 mm, were completely removed from the glass tube. 200 mg of a substrate film was placed in the glass tube. Then the glass tube was heated to 100°C and maintained at that temperature for 60 minutes during which generated gas was continuously collected. The collected gas was analyzed by a thermal desorption gas chromatography mass spectrometric analyzer (TDS-GC-MS). Among the collected gas, the total amount of ingredients having a molecular weight of not larger than 200 was measured as the residual volatile ingredients.

(3) Saturated Water Absorption (% by weight) of Substrate Film

A substrate film was immersed in water at 23°C for one week according to ASTM D530, and the weight increase of film was measured.

(4) Depth or Height (μm) of Die Line on Substrate Film

Using a non-contact three dimensional surface configuration and roughness tester (available from Zygo Corporation), die lines on a substrate film were observed at a visual field of 5.6 mm (transverse direction) ×4.4 mm (longitudinal direction). The visual field was divided into 640 (transverse direction) ×480 (longitudinal direction) squares, and the depth or height of die lines was observed on these squares.

(5) Refractive Index of Hard Coat Layer and Low Refractive Index Layer

Using high speed spectral elipsometric meter ("M-2000U" available from J.A. Woollam Co.), the measurement was conducted at a wavelength of 245-1000 nm, and incident angles of 55°, 60° and 65°. The refractive index was calculated from the data obtained by measurement.

(6) Degree of Polarization of Polarizing Film

Two polarizing films were superposed in a manner such that the polarizing axes were in parallel, and a light transmittance ($H_0$ of the superposed films was measured. Two polarizing films were superposed in a manner such that the polarizing axes were perpendicular to each other, and a light transmittance ($H_{90}$) of the superposed films was measured. The measurement was carried out according to JIS Z8701 using C light source at a visual field of 2 degrees by using a spectrophotometer. The polarization percentage was calculated from the following equation. The $H_{90}$ and $H_{90}$ were values as corrected depending upon the visual sensitivity.

$$\text{Polarization percentage (\%)} = [(H_0 - H_{90})/(H_0 + H_{90})]^{1/2} \times 100$$

(7) Light Reflectivity (%)

Reflected ray spectrum was measured on voluntarily chosen three measurement points on an optical multilayer film using a spectrophotometer ("Ultraviolet Visible Near-Infrared Spectrophotometer V-570" available from JASCO Corporation) at an incident angle of 5° and at a wavelength in the range of 430 to 700 nm. The light reflectivity was expressed by the reflectivity as measured at a wavelength of 550 nm and the maximum reflectivity as measured in the wavelength range of 430 to 700 nm.

(8) Visibility

A polarizing film was cut into a square having a size of about 10 cm × about 10 cm. Using the square polarizing film, a liquid crystal display element having a layer structure as illustrated in Fig. 3 was made in a fashion that the low refractive index layer of the polarizing film 81 was located as the uppermost layer. The thus-made liquid crystal display element 98 was placed on a commercially available light box ("Light-Viewer 7000PRO" available from HAKUBA Photo Industry Co.) to manufacture a simplified liquid crystal panel. The panel was viewed from the front with a liquid crystal display element indication of black. The visibility was evaluated according to the following three ratings.
A: Glare and mirroring were not observed at all. By the term "glare" as used herein, we mean that unpleasant feeling or indistinctness due to the fact that too bright spots or plane are found in the visual field. That is, dazzling brightness is directly or indirectly felt from a light source.
B: Glare and mirroring were observed to a slight extent.
C: Glare and mirroring were observed on the entire visual field.

(9) Contrast

The liquid crystal display panel made in the above (8) was placed in a dark room, and luminance was measured at an angle of 5° from the normal by using a color luminance tester "BM-7" available from Topcon Co. The measurement was conducted at a black state and a white state, and the contrast was expressed in terms of a ratio of the luminance as measured at a brightness indication to the luminance as measured at a darkness indication. The larger the luminance ratio, the better the visibility.

Production Example 1

Preparation of Substrate Film 1A

Pellets of a norbornene polymer (trade name "ZEONOR 1420R" available from Zeon Corporation, glass transition temperature: 136°C, saturation water absorption: below 0.01% by weight) were dried in a hot air oven at 110°C for 4 hours. The pellets were melt-extruded at 260°C through a single screw extruder equipped with a coathanger T-die with a lip width of 650 mm and having a die lip provided with a leaf disc-shaped polymer filter (filtration precision: 30 μm). The inner surface of the die lip used was chromium-plated and had a surface roughness Ra of 0.05 μm. Thus, a substrate film 1A having a width of 600 mm was obtained. The substrate film 1A had a volatile content of not larger than 0.01% by weight and a saturated water content of not larger than 0.01% by weight. The substrate film 1A had a datum thickness of 40 μm, a thickness fluctuation of 2.3% and a die line depth of 0.01 μm.

Production Example 2

Preparation of Hard Coat Layer ($n_d^{20}$ = 1.62)-Forming Composition H1

To 1,000 parts by weight of a modified alcohol sol of antimony pentaoxide (solid content: 30%, supplied by Catalysts and Chemicals Ind. Co., Ltd.), 100 parts by weight of ultraviolet-curable urethane acrylate (tradename "Shikou UV 7000B" available from The Nippon Synthetic Chem. Ind. Co., Ltd.) and 4 parts by weight of a photopolymerization initiator (tradename "Irgacure 184" available from Ciba-Geigy) were added and mixed together to prepare an ultraviolet-curable, hard coat layer-forming composition H1.

Production Example 3

Preparation of Hard Coat Layer ($n_d^{20}$ = 1.57)-Forming Composition H2

To 330 parts by weight of a modified alcohol sol of antimony pentaoxide (solid content: 30%, supplied by Catalysts and Chemicals Ind. Co., Ltd.), 100 parts by weight of ultraviolet-curable urethane acrylate (tradename "Shikou UV 7000B" available from The Nippon Synthetic Chem. Ind. Co., Ltd.) and 4 parts by weight of a photopolymerization initiator (tradename "Irgacure 184" available from Ciba-Geigy) were added and mixed together to prepare an ultraviolet-curable, hard coat layer-forming composition H2.

Production Example 4

Preparation of Hard Coat Layer ($n_d^{20}$ = 1.51)-Forming Composition H3

100 Parts by weight of ultraviolet-curable urethane acrylate (tradename "Shikou UV 7000B" available from The Nippon Synthetic Chem. Ind. Co., Ltd.) and 4 parts by weight of a photopolymerization initiator (tradename "Irgacure 184" available from Ciba-Geigy) were mixed together to prepare an ultraviolet-curable, hard coat layer-forming composition H3.

Production Example 5

Preparation of Hard Coat Layer ($n_d^{20}$ = 1.68)-Forming Composition H4

To 1,530 parts by weight of a modified alcohol sol of antimony pentaoxide (solid content: 30%, supplied by Catalysts and Chemicals Ind. Co., Ltd.), 100 parts by weight of ultraviolet-curable urethane acrylate (tradename "Shikou UV 7000B" available from The Nippon Synthetic Chem. Ind. Co. , Ltd.) and 4 parts by weight of a photopolymerization initiator (tradename "Irgacure 184" available from Ciba-Geigy) were added and mixed together to prepare an ultraviolet-curable, hard coat layer-forming composition H4.

Production Example 6

Preparation of Low Refractive Index Layer-Forming Composition L1

To 166.4 parts of tetraethoxysilane, 392.6 parts of methanol, 11.7 parts of heptadecafluorodecyltriethoxysilane $CF_3(CF_2)_7CH_2CH_2Si(OC_2H_5)_3$, and 29.3 parts of a 0.005N aqueous hydrochloric acid solution ($[H_2O]/[OR]=0.5$) were

added in this order. The mixture was thoroughly mixed together by a disper. The mixed liquid was stirred at 25°C for 2 hours in a thermostat vessel to give a fluorine/silicone copolymerization-hydrolysis product (B) having a weight average molecular weight of 830 as a matrix-forming material (solid content of the condensed compound: 10%).

Then an IPA (isopropanol)-dispersed sol of fine hollow silica particles (solid content: 20% by weight, average primary particle diameter: about 60 nm, shell thickness: about 10 nm, supplied by Catalysts and Chemicals Ind. Co., Ltd.) was added and mixed together with the above-mentioned fluorine/silicone copolymerization-hydrolysis product (B). The ratio of the fine hollow silica particles/the copolymerization-hydrolysis product (B) (as solid content of the condensed compound) was 50/50 by weight. The mixed liquid was diluted with a mixed solvent of IPA/butyl acetate/butyl cellosolve to prepare a solution having a 1% solid content. The composition of the mixed solvent had been previously adjusted so that the resulting 1% solid content solution contained 5% of butyl acetate and 2% of butyl cellosolve. Dimethylsiliconediol (n = about 40) was diluted with ethyl acetate to prepare a solution having a 1% solid content. This dimethylsiliconediol solution was added to the above-mentioned 1% solid content solution of the fine hollow silica particles/the copolymerization-hydrolysis product (B) to prepare a low refractive index layer-forming composition L1. The composition L1 contained 2% by weight of dimethylsiliconediol as solid content based on the total solid content of the fine hollow silica particles/the copolymerization-hydrolysis product (B).

Production Example 7

Preparation of Low Refractive Index Layer-Forming Composition L2

To 166.4 parts of tetraethoxysilane, 493.1 parts of methanol, 30.1 parts of a 0.005N aqueous hydrochloric acid solution ($[H_2O]/[OR]=0.5$) were added in this order. The mixture was thoroughly mixed together by a disper. The thus-obtained mixed liquid was stirred at 25°C for 2 hours in a thermostat vessel to give a silicone hydrolysis product (A) having a weight average molecular weight of 850. Then 30.4 parts of $(H_3CO)_3SiCH_2CH_2(CF_2)_7CH_2CH_2Si(OCH_3)$ was added as component (C) to the silicone hydrolysis product (A), and the mixed liquid was stirred at 25°C for 1 hour in a thermostat vessel to give a matrix-forming material containing 10% of the condensed compound as solid content.

Then an IPA (isopropanol)-dispersed sol of fine hollow silica particles (solid content: 20% by weight, average primary particle diameter: about 60 nm, shell thickness: about 10 nm, supplied by Catalysts and Chemicals Ind. Co., Ltd.) was added and mixed together with the above-mentioned silicone hydrolysis product (A). The ratio of the fine hollow silica particles/the matrix-forming material (as solid content of the condensed compound) was 40/60 by weight. The mixed liquid was diluted with a mixed solvent of IPA/butyl acetate/butyl cellosolve to prepare a solution having a 1% solid content. The composition of the mixed solvent had been previously adjusted so that the resulting 1% solid content solution contained 5% of butyl acetate and 2% of butyl cellosolve. Dimethylsiliconediol (n = about 40) was diluted with ethyl acetate to prepare a solution having a 1% solid content. This dimethylsiliconediol solution was added to the above-mentioned 1% solid content solution of the fine hollow silica particles/the matrix-forming material (as solid content of the condensed compound) to prepare a low refractive index layer-forming composition L2. The composition L2 contained 2% by weight of dimethylsiliconediol as solid content based on the total solid content of the fine hollow silica particles/the matrix-forming material.

Production Example 8

Preparation of Low Refractive Index Layer-Forming Composition L3

To 208 parts of tetraethoxysilane, 356 parts of methanol, 36 parts of a 0.005N aqueous hydrochloric acid solution ($[H_2O]/[OR]=0.5$) were added in this order. The mixture was thoroughly mixed together by a disper. The thus-obtained mixed liquid was stirred at 25°C for 1 hour in a thermostat vessel to give a silicone hydrolysis product (A) having a weight average molecular weight of 780 as a matrix-forming material.

Then an IPA (isopropanol)-dispersed sol of fine hollow silica particles (solid content: 20% by weight, average primary particle diameter: about 60 nm, shell thickness: about 10 nm, supplied by Catalysts and Chemicals Ind. Co., Ltd.) was added and mixed together with the above-mentioned silicone hydrolysis product (A). The ratio of the fine hollow silica particles/the matrix-forming material (as solid content of the condensed compound) was 50/50 by weight. The thus-obtained mixed liquid was stirred at 25°C for 2 hours in a thermostat vessel to give a re-hydrolysis product having a weight average molecular weight of 980 (solid content of the condensed compound: 10%).

To 104 parts of tetraethoxysilane, 439. 8 parts of methanol, 36.6 parts of heptadecafluorodecyltriethoxysilane $CF_3(CF_2)_{7C}H_2CH_2Si(OC_2H_5)_3$, and 19.6 parts of a 0.005N aqueous hydrochloric acid solution ($[H_2O]/[OR]=0.5$) were added in this order. The mixture was thoroughly mixed together by a disper. The mixed liquid was stirred at 25°C for 2 hours in a thermostat vessel to give a fluorine/silicone copolymerization--hydrolysis product (B) having a weight average molecular weight of 850 (solid content of the condensed compound: 10%).

The re-hydrolysis product containing the fine hollow silica particles was mixed together with the copolymerization-hydrolysis product (B) so that the ratio of the re-hydrolysis product/the copolymerization-hydrolysis product (B) was 80/20 by weight as solid content. The mixed liquid was diluted with a mixed solvent of IPA/butyl acetate/butyl cellosolve to prepare a low refractive index layer-forming composition L3. The composition of the mixed solvent had been previously adjusted so that the resulting composition L3 contained 5% of butyl acetate and 2% of butyl cellosolve.

Production Example 9

Preparation of Low Refractive Index Layer-Forming Composition L4

To 166.4 parts of tetraethoxysilane, 493.1 parts of methanol, 30.1 parts of a 0.005N aqueous hydrochloric acid solution ($[H_2O]$ / $[OR]$=0.5) were added in this order. The mixture was thoroughly mixed together by a disper. The thus-obtained mixed liquid was stirred at 25°C for 2 hours in a thermostat vessel to give a silicone hydrolysis product (A) having a weight average molecular weight of 850. Then 30.4 parts of $(H_3CO)_3SiCH_2CH_2(CF_2)_7CH_2CH_2Si\ (OCH_3)$ was added as component (C) to the silicone hydrolysis product (A), and the mixed liquid was stirred at 25°C for 1 hour in a thermostat vessel to give a matrix-forming material containing 10% of the condensed compound as solid content.

Tetramethoxysilane, methanol, water and 28% aqueous ammonia were mixed together at a proportion of 470: 812:248:6 by mass, respectively, to prepare a mixed solution. The mixed solution was stirred for 1 minute. Then 20 parts by weight of hexamethyldisilazane was added to 100 parts by weight of the mixed solution, and the thus-obtained mixture was diluted with the same amount of IPA to stop the polymerization before gelling of the mixture. Thus stabilized organosilica-sol having dispersed therein fine porous silica particles with an average particle diameter of 50 nm was obtained.

Then an IPA (isopropanol)-dispersed sol of fine hollow silica particles (solid content: 20% by weight, average primary particle diameter: about 60 nm, shell thickness: about 10 nm, supplied by Catalysts and Chemicals Ind. Co., Ltd.) was added and mixed together with the above-mentioned silicone hydrolysis product (A). The ratio of the fine hollow silica particles/porous silica particles/the matrix-forming material (as solid content of the condensed compound) was 30/10/50 by weight. The mixed liquid was diluted with a mixed solvent of IPA/butyl acetate/butyl cellosolve to prepare a solution having a 1% solid content. The composition of the mixed solvent had been previously adjusted so that the resulting 1% solid content solution contained 5% of butyl acetate and 2% of butyl cellosolve. Dimethylsiliconediol (n = about 250) was diluted with ethyl acetate to prepare a solution having a 1% solid content. This dimethylsiliconediol solution was added to the above-mentioned 1% solid content solution of the fine hollow silica particles/porous silica particles/the matrix-forming material (as solid content of the condensed compound) to prepare a low refractive index layer-forming composition L4. The composition L4 contained 2% by weight of dimethylsiliconediol as solid content based on the total solid content of the fine hollow silica particles/the matrix-forming material (as solid content of the condensed compound).

Production Example 10

Preparation of Low Refractive Index Layer-Forming Composition L5

To 156 parts of tetraethoxysilane, 402.7 parts of methanol, 13.7 parts of heptadecafluorodecyltriethoxysilane $CF_3(CF_2)_7CH_2CH_2Si(OC_2H_5)_3$, and 27.6 parts of a 0.005N aqueous hydrochloric acid solution ($[H_2O]/[OR]$=0.5) were added in this order. The mixture was thoroughly mixed together by a disper. The mixed liquid was stirred at 25°C for 2 hours in a thermostat vessel to give a fluorine/silicone copolymerization-hydrolysis product (B) having a weight average molecular weight of 830 as a matrix-forming material (solid content of the condensed compound: 10%).

To 208 parts of tetraethoxysilane, 402.7 parts of methanol, 126 parts of water, and 18 parts of a 0.01N aqueous hydrochloric acid solution ($[H_2O]/[OR]$=2.0) were added in this order. The mixture was thoroughly mixed together by a disper. The mixed liquid was stirred at 60°C for 20 hours in a thermostat vessel to give a silicone-complete hydrolysis product (solid content of the condensed compound: 10%).

Then an IPA (isopropanol)-dispersed sol of fine hollow silica particles (solid content: 20% by weight, average primary particle diameter: about 60 nm, shell thickness: about 10 nm, supplied by Catalysts and Chemicals Ind. Co., Ltd.) was added and mixed together with the above-mentioned fluorine/silicone copolymerization-hydrolysis product (B) and the silicone-complete hydrolysis product. The ratio of the fine hollow silica particles/the copolymerization-hydrolysis product (B)/ the silicone-complete hydrolysis product (as solid content of the condensed compound) was 50/40/10 by weight. The mixed liquid was diluted with a mixed solvent of IPA/butyl acetate/butyl cellosolve to prepare a solution having a 1% solid content. The composition of the mixed solvent had been previously adjusted so that the resulting 1% solid content solution contained 5% of butyl acetate and 2% of butyl cellosolve. Dimethylsiliconediol (n = about 40) was diluted with ethyl acetate to prepare a solution having a 1% solid content. This dimethylsiliconediol solution was added

to the above- mentioned 1% solid content solution of the fine hollow silica particles/the copolymerization-hydrolysis product (B) /the silicone-complete hydrolysis product to prepare a low refractive index layer-forming composition L5. The composition L5 contained 4% by weight of dimethylsiliconediol as solid content based on the total solid content of the fine hollow silica particles/the copolymerization-hydrolysis product (B)/the silicone-complete hydrolysis product.

Production Example 11

Preparation of Low Refractive Index Layer-Forming Composition L6

To 208 parts of tetraethoxysilane, 356 parts of methanol, 36 parts of a 0.005N aqueous hydrochloric acid solution ([$H_2O$]/[OR]=0.5) were added in this order. The mixture was thoroughly mixed together by a disper. The thus-obtained mixed liquid was stirred at 25°C for 2 hours in a thermostat vessel to give a silicone hydrolysis product (A) having a weight average molecular weight of 850 as matrix-forming material (solid content of the condensed compound: 10%).

Then an IPA (isopropanol)-dispersed sol of fine hollow silica particles (solid content: 20% by weight, average primary particle diameter: about 60 nm, shell thickness: about 10 nm, supplied by Catalysts and Chemicals Ind. Co., Ltd.) was added and mixed together with the above-mentioned silicone hydrolysis product (A). The ratio of the fine hollow silica particles/the silicone hydrolysis product (A) (as solid content of the condensed compound) was 60/40 by weight. The mixed liquid was diluted with a mixed solvent of IPA/butyl acetate/butyl cellosolve to prepare a solution having a 1% solid content. The composition of the mixed solvent had been previously adjusted so that the resulting 1% solid content solution contained 5% of butyl acetate and 2% of butyl cellosolve. Dimethylsiliconediol (n = about 250) was diluted with ethyl acetate to prepare a solution having a 1% solid content. This dimethylsiliconediol solution was added to the above-mentioned 1% solid content solution of the fine hollow silica particles/the silicone hydrolysis product (A) to prepare a low refractive index layer-forming composition L6. The composition L6 contained 2% by weight of dimethylsiliconediol as solid content based on the total solid content of the fine hollow silica particles/the silicone hydrolysis product (A).

Production Example 12

Preparation of Low Refractive Index Layer-Forming Composition L7

To 166.4 parts of tetraethoxysilane, 493.1 parts of methanol, and 30.1 parts of a 0.005N aqueous hydrochloric acid solution ([$H_2O$]/[OR]=0.5) were added in this order. The mixture was thoroughly mixed together by a disper. The mixed liquid was stirred at 25°C for 1 hour in a thermostat vessel to give a silicone hydrolysis product (A) having a weight average molecular weight of 800. Then 30.4 parts of $(H_3CO)_3SiCH_2CH_2(CF_2)_7CH_2CH_2Si(OCH_3)_3$ was added as component (C) to the silicone hydrolysis product (A), and the mixed liquid was stirred at 25°C for 1 hour in a thermostat vessel to give a matrix-forming material having a weight average molecular weight of 950 (solid content of the condensed compound: 10%).

Then an IPA (isopropanol)-dispersed sol of fine hollow silica particles (solid content: 20% by weight, average primary particle diameter: about 60 nm, shell thickness: about 10 nm, supplied by Catalysts and Chemicals Ind. Co., Ltd.) was added and mixed together with the above-mentioned matrix-forming material. The ratio of the fine hollow silica particles/the copolymerization-hydrolysis product (B) (as solid content of the condensed compound) was 30/70 by weight. The mixed liquid was diluted with a mixed solvent of IPA/butyl acetate/butyl cellosolve to prepare a solution having a 1% solid content. The composition of the mixed solvent had been previously adjusted so that the resulting 1% solid content solution contained 5% of butyl acetate and 2% of butyl cellosolve. Dimethylsiliconediol (n = about 40) was diluted with ethyl acetate to prepare a solution having a 1% solid content. This dimethylsiliconediol solution was added to the above-mentioned 1% solid content solution of the fine hollow silica particles/the copolymerization-hydrolysis product (B) to prepare a low refractive index layer-forming composition L7. The composition L7 contained 2% by weight of dimethylsiliconediol as solid content based on the total solid content of the fine hollow silica particles/the matrix-forming material (as solid content of the condensed compound).

Production Example 13

Preparation of Low Refractive Index Layer-Forming Composition L8

Oligomer of tetramethoxysilane ("methyl silicate 51" available from Fuso Chem. Co., Ltd.) and N,N-dimethylformamide were mixed together at a ratio of 470/406 by mass to prepare a liquid A. Separately, water, aqueous 28% ammonia and N,N-dimethylformamide were mixed together at a ratio of 500/10/406 by mass to prepare a liquid B. The

liquid A and the liquid B were mixed together at a ratio of 16/17 by mass, and, when 1.5 minutes elapsed from the mixing, the mixed liquid was diluted 20 times with methanol to prepare a low refractive index layer-forming composition L8.

Production Example 14

Preparation of Polarizing Film

A PVA film (degree of polymerization: 2,400, degree of saponification: 99.9%) with a thickness of 45 μm was swollen with pure water. The swollen PVA film was immersed in an aqueous solution containing 1% by weight of iodine and 3% by weight of potassium iodide, whereby the PVA film was dyed. Then the PVA film was dipped in an aqueous boric acid solution with a 4.5% by weight concentration, and then stretched at a draw ratio of 5.3 in the longitudinal direction. Subsequently the PVA film was dipped in an aqueous borax solution with a 5% by weight concentration and stretched at a total draw ratio of 5.5. Water was removed from the stretched film, and the film was dried at 50°C to prepare a polarizing film. The polarizing film had a thickness of 18 μm and a polarization degree of 99.95%.

Example 1

One surface of triacetyl cellulose (TAC) film (tradename, KC4UX2M, available from Konica-Minolta Corp.; length: 1000 m, width 650 mm, thickness: 40 μm) was subjected to corona discharge treatment to prepare a substrate film 1B having a surface tension of 0.055 N/m. The corona discharge conditions were as follows. High frequency source: AGI-024, available from Kasuga Electric. Co.; output 800W; bar electrode: 12 crests x 900 nm x 1 pole; electrode length 900 mm; gap 900 μm.

One surface (modified surface) of the substrate film 1B was coated with a hard coat layer-forming composition H1 prepared in Production Example 2, so that a cured hard coat layer having a thickness of 5 μm was formed. The coating was continuously carried out using a die coater. The coating was dried at 100°C for 2 minutes, and then irradiated with ultraviolet rays at an integrated light quantity of 1,000 mJ/cm$^2$ whereby the hard coat layer-forming composition was cured to form a hard coat layer-laminated film 1C. The cured hard coat layer had a thickness of 5 μm, a surface roughness of 0.2 μm and a refractive index of 1.62.

One surface (i.e., hard coat layer-formed surface) of the hard coat layer-laminated film 1C was subjected to corona discharge treatment to prepare a hard coat layer-laminated film 1D. The corona discharge conditions were as follows. High frequency source: AGI-024, available from Kasuga Electric. Co.; output 400W; bar electrode: 12 crests x 900 nm x 1 pole; electrode length 900 mm; gap 900 μm.

One surface (modified surface) of the hard coat layer-laminated film 1D was coated with the low refractive index layer-forming composition L1 prepared in Production Example 6, so that a cured low refractive index layer having a thickness of 100 nm was formed. The coating was continuously carried out using a die coater. The coating was dried at 120°C for 2 minutes, and then irradiated with ultraviolet rays at an integrated light quantity of 400 mJ/cm$^2$ whereby the low refractive index layer-forming composition was cured to form an optical multilayer film 1E. The cured low refractive index layer had a thickness of 100 nm, and a refractive index of 1.35.

The surface opposite to the exposed low refractive index layer of the optical multilayer film 1E was coated with 25 ml/m$^2$ of a 1.5 N potassium hydroxide solution in isopropanol. The coating was dried at 25°C for 5 seconds, and then washed with running water, and again dried by blowing air at 25°C against the film surface. Thus one surface of the optical multilayer film 1E was saponified to give an optical multilayer film 1F.

The polarizing film produced in Product Example 14 was adhered on the saponified surface of the optical multilayer film 1F through a polyvinyl alcohol adhesive. Thus a polarizing film having an antireflection function 1G was obtained. Optical characteristics of the polarizing film 1G were evaluated. The results are shown in Table 1.

Example 2

An optical multilayer film 2F (polarizing film-protective film) and a polarizing film having an antireflection function 2G were made by the same procedures as described in Example 1 except that the low refractive index layer-forming composition L2 was used instead of the low refractive index layer-forming composition L1 with all other conditions remaining the same. The hard coat layer had a refractive index of 1.62, and the low refractive index layer had a refractive index of 1.37. Optical characteristics of the polarizing film 2G were evaluated. The results are shown in Table 1.

Example 3

An optical multilayer film 3F (polarizing film-protective film) and a polarizing film having an antireflection function 3G were made by the same procedures as described in Example 1 except that the substrate film 1A produced in

Production Example 1 was used as a substrate film instead of the substrate film 2A, and the low refractive index layer-forming composition L3 was used instead of the low refractive index layer-forming composition L1 with all other conditions remaining the same. The hard coat layer had a refractive index of 1.62, and the low refractive index layer had a refractive index of 1.36. Optical characteristics of the polarizing film 3G were evaluated. The results are shown in Table 1.

Example 4

An optical multilayer film 4F (polarizing film-protective film) and a polarizing film having an antireflection function 4G were made by the same procedures as described in Example 1 except that the low refractive index layer-forming composition L4 was used instead of the low refractive index layer-forming composition L1 with all other conditions remaining the same. The hard coat layer had a refractive index of 1.62, and the low refractive index layer had a refractive index of 1.36. Optical characteristics of the polarizing film 4G were evaluated. The results are shown in Table 1.

Example 5

An optical multilayer film 5F (polarizing film-protective film) and a polarizing film having an antireflection function 5G were made by the same procedures as described in Example 1 except that the low refractive index layer-forming composition L5 was used instead of the low refractive index layer-forming composition L1 with all other conditions remaining the same. The hard coat layer had a refractive index of 1.62, and the low refractive index layer had a refractive index of 1.33. Optical characteristics of the polarizing film 5G were evaluated. The results are shown in Table 1.

Example 6

An optical multilayer film 6F (polarizing film-protective film) and a polarizing film having an antireflection function 6G were made by the same procedures as described in Example 1 except that the low refractive index layer-forming composition L6 was used instead of the low refractive index layer-forming composition L1 with all other conditions remaining the same. The hard coat layer had a refractive index of 1.62, and the low refractive index layer had a refractive index of 1.34. Optical characteristics of the polarizing film 6G were evaluated. The results are shown in Table 1.

Example 7

An optical multilayer film 7F (polarizing film-protective film) and a polarizing film having an antireflection function 7G were made by the same procedures as described in Example 1 except that the hard coat layer-forming composition H2 was used instead of the hard coat layer-forming composition H1 with all other conditions remaining the same. The hard coat layer had a refractive index of 1.57, and the low refractive index layer had a refractive index of 1.35. Optical characteristics of the polarizing film 6G were evaluated. The results are shown in Table 1.

Example 8

An optical multilayer film 8F (polarizing film-protective film) and a polarizing film having an antireflection function 8G were made by the same procedures as described in Example 7 except that the substrate film 1A produced in Production Example 1 was used as a substrate film instead of the substrate film 2A, and the low refractive index layer-forming composition L5 was used instead of the low refractive index layer-forming composition L1 with all other conditions remaining the same. The hard coat layer had a refractive index of 1.57, and the low refractive index layer had a refractive index of 1.33. Optical characteristics of the polarizing film 8G were evaluated. The results are shown in Table 1.

Comparative Example 1

An optical multilayer film 9F (polarizing film-protective film) and a polarizing film having an antireflection function 9G were made by the same procedures as described in Example 1 except that the hard coat layer-forming composition H3 was used instead of the hard coat layer-forming composition H1 with all other conditions remaining the same. The hard coat layer had a refractive index of 1.51, and the low refractive index layer had a refractive index of 1.35. Optical characteristics of the polarizing film 6G were evaluated. The results are shown in Table 1.

Comparative Example 2

An optical multilayer film 10F (polarizing film-protective film) and a polarizing film having an antireflection function 10G were made by the same procedures as described in Example 1 except that the low refractive index layer-forming

composition L7 was used instead of the low refractive index layer-forming composition L1 with all other conditions remaining the same. The hard coat layer had a refractive index of 1.62, and the low refractive index layer had a refractive index of 1.40. Optical characteristics of the polarizing film 10G were evaluated. The results are shown in Table 1.

Comparative Example 3

A hard coat layer-laminated film 11D was made by the same procedures as described in Example 1 except that the hard coat layer-forming composition H4 was used instead of the hard coat layer-forming composition H1 with all other conditions remaining the same. The hard coat layer had a refractive index of 1.68.

Then the hard coat layer-laminated film 11D was coated with a low refractive index layer-forming composition L8 at a wet coating thickness of about 2 μm by using a bar coater. The coated film was allowed to leave for 1 minute, and then the coated film was placed in a high-pressure vessel, and the vessel was filled with liquid carbon dioxide. The temperature of the content in the vessel was elevated, and subjected to supercritical drying under conditions of 40°C and 10 MPa for 2 hours, to give an optical multilayer film 11E having a hard coat layer on which a low refractive index layer with a thickness of 100 nm was formed. The low refractive index layer had a refractive index of 1.07.

A polarizing film having an antireflection function 11G was made from the optical multilayer film 11E with a hard coat layer having formed thereon a low refractive index layer, by the same procedures as described in Example 1. Optical characteristics of the polarizing film 10G were evaluated. The results are shown in Table 1.

Table 1

| | Ex. 1 | Ex. 2 | Ex. 3 | Ex. 4 | Ex. 5 | Ex. 6 |
|---|---|---|---|---|---|---|
| Hard coat layer-forming composition | H1 | H1 | H1 | H1 | H1 | H1 |
| Refractive index of hard coat layer | 1.62 | 1.62 | 1.62 | 1.62 | 1.62 | 1.62 |
| Low refractive index layer-forming composition | L1 | L2 | L3 | L4 | L5 | L6 |
| Refractive index of low refractive index layer | 1.35 | 1.37 | 1.36 | 1.36 | 1.33 | 1.34 |
| Reflectivity at 550 nm | 0.5 | 0.7 | 0.5 | 0.6 | 0.3 | 0.4 |
| Reflectivity at 430-700 nm | 1.2 | 1.4 | 1.2 | 1.3 | 1.0 | 1.1 |
| Visibility | A | A | A | A | A | A |
| Contrast | 300 | 200 | 300 | 250 | 350 | 330 |

| | Ex. 7 | Ex. 8 | Co.Ex. 1 | Co.Ex. 2 | Co.Ex. 3 |
|---|---|---|---|---|---|
| Hard coat layer-forming composition | H2 | H2 | H3 | H1 | H4 |
| Refractive index of hard coat layer | 1.57 | 1.57 | 1.51 | 1.62 | 1.68 |
| Low refractive index layer-forming composition | L1 | L5 | L1 | L7 | L8 |
| Refractive index of low refractive index layer | 1.35 | 1.33 | 1.35 | 1.4 | 1.07 |
| Reflectivity at 550 nm | 0.6 | 0.5 | 1.0 | 1.2 | 4.2 |
| Reflectivity at 430-700 nm | 1.2 | 1.2 | 1.6 | 1.8 | 4.9 |
| Visibility | A | A | B | B | C |
| Contrast | 260 | 300 | 150 | 100 | 20 |

As seen from Table 1, optical multilayer films according to the present invention, made in Examples 1-8, which comprise a hard coat layer and at least one low refractive index layer, which layers are laminated, in this order, on a surface of a substrate film comprising a transparent resin, wherein the refractive index $n_H$ of the hard coat layer and the refractive index $n_L$ of the low refractive index layer satisfy the following three formulae [1], [2] and [3],

$$\text{Formula [1]} : n_L \leqq 1.37$$

$$\text{Formula [2]} : n_H \geqq 1.53$$

$$\text{Formula [3]} : (n_H)^{1/2} - 0.2 < n_L < (n_H)^{1/2} + 0.2,$$

are characterized as exhibiting a low light reflectivity at a wavelength of 550 nm and a wavelength of 430-700 nm, and exhibiting enhanced visibility and enhanced contrast at light and dark displays.

In contrast, comparative optical multilayer films, made in Comparative Examples 1-8, which do not satisfy the three formulae [1], [2] and [3], exhibit a large light reflectivity at a wavelength of 550 nm and a wavelength of 430-700 nm, and exhibiting poor visibility and poor contrast at light and dark displays.

Industrial Applicability

The optical multilayer film according to the present invention exhibits good optical properties, i.e., a low light reflection, a reduced glare and mirroring, an enhanced visibility, and therefore, is suitable as an antireflection protective film of optical parts. A liquid crystal display provided with the optical multilayer film exhibits an enhanced contrast at light and dark displays.

## Claims

**1.** An optical multilayer film for a liquid crystal display comprising a hard coat layer and a low refractive index layer comprising aerogel, which layers are laminated, in this order, directly or with another intervening layer on one surface of a substrate film comprising a transparent resin, wherein the refractive index $n_H$ of the hard coat layer and the refractive index $n_L$ of the low refractive index layer satisfy the following three formulae [1], [2] and [3],

$$\text{Formula [1]} : n_L \leqq 1.37$$

$$\text{Formula [2]} : n_H \geqq 1.53$$

$$\text{Formula [3]} : (n_H)^{1/2} - 0.2 < n_L < (n_H)^{1/2} + 0.2.$$

**2.** The optical multilayer film for a liquid crystal display according to claim 1, wherein the low refractive index layer is a cured film formed from a coating material composition comprising:

(i) fine hollow particles having a shell comprised of a metal oxide,
(ii) at least one hydrolysis product selected from:

(ii-1) a hydrolysis product (A) obtained by hydrolysis of a hydrolyzable organosilane represented by the

following general formula (1):

$SiX_4$

where X is a hydrolyzable group, and

(ii-2) a copolymerization-hydrolysis product (B) obtained by hydrolysis and copolymerization of a hydrolyzable organosilane represented by the formula (1) with a hydrolyzable organosilane having a fluorine-substituted alkyl group or groups; and

(iii) a hydrolyzable organosilane (C) having water-repellent groups in its straight-chain structure, and having at least two silicon atoms in the molecule, each of which is bonded with an alkoxy group or alkoxy groups.

**3.** The optical multilayer film for a liquid crystal display according to claim 2, wherein the water-repellent groups of the hydrolyzable organosilane (C) are represented by the following general formula (2) or (3):

General formula (2):

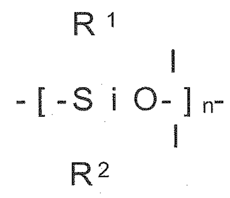

where $R^1$ and $R^2$ represents an alkyl group, and n is an integer of 2 to 200,

General formula (3): $-[-CF_2-]_m-$

where m is an integer of 2 to 20.

**4.** The optical multilayer film for a liquid crystal display according to claim 1, wherein the low refractive index layer is a cured film formed from a coating material composition comprising:

(i) fine hollow particles having a shell comprised of a metal oxide,

(ii) at least one hydrolysis product selected from:

(ii-1) a hydrolysis product (A) obtained by hydrolysis of a hydrolyzable organosilane represented by the following general formula (1):

$SiX_4$

where X is a hydrolyzable group, and

(ii-2) a copolymerization-hydrolysis product (B) obtained by hydrolysis and copolymerization of a hydrolyzable organosilane represented by the formula (1) with a hydrolyzable organosilane having a fluorine-substituted alkyl group or groups; and

(iii) a dimethyl-type silicone diol (D) represented by the following general formula (4):

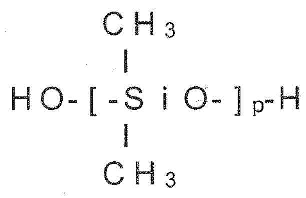

where p is a positive integer.

**5.** The optical multilayer film for a liquid crystal display according to claim 4, wherein the positive integer p in the formula (4) is in the range of 20 to 100.

**6.** The optical multilayer film for a liquid crystal display according to claim 1, wherein the low refractive index layer is a cured film formed from a coating material composition comprising:

(i) a re-hydrolyzed product obtained by subjecting a mixture comprising fine hollow particles having a shell comprised of a metal oxide, and a hydrolysis product (A) obtained by hydrolysis of a hydrolyzable organosilane represented by the following general formula (1):

$$SiX_4$$

where X is a hydrolyzable group, to a hydrolysis treatment whereby the hydrolysis product (A) is re-hydrolyzed; and
(ii) a copolymerization-hydrolysis product (B) obtained by hydrolysis and copolymerization of a hydrolyzable organosilane represented by the formula (1) with a hydrolyzable organosilane having a fluorine-substituted alkyl group or groups.

**7.** The optical multilayer film for a liquid crystal display according to any one of claims 2 to 6, wherein the coating material composition for forming the cured film further comprises:

(a) porous particles, which are prepared by subjecting a mixture comprising an alkyl silicate, a solvent, water and a catalyst for hydrolysis and polymerization, to a hydrolysis-polymerization whereby the alkyl silicate is hydrolyzed and polymerized; and then removing the solvent by drying the hydrolysis-polymerization product; and/or
(b) porous particles having a cohesion average particle diameter in the range of 10 nm to 100 nm, which are prepared by subjecting a mixture comprising an alkyl silicate, a solvent, water and a catalyst for hydrolysis and polymerization, to a hydrolysis-polymerization whereby the alkyl silicate is hydrolyzed and polymerized; terminating polymerization before the polymerization mixture is gelled to give a stabilized organosilica sol; and then removing the solvent by drying the organosilica sol.

**8.** The optical multilayer film for a liquid crystal display according to any one of claims 2 to 6, wherein the hydrolysis product (A) comprises a partially or completely hydrolyzed product having a weight average molecular weight of at least 2, 000 which is prepared by hydrolyzing the hydrolyzable organosilane of the formula (1) in the presence of water in amount such that the molar ratio of $[H_2O]/[X]$ is in the range of 1.0 to 5.0 and further in the presence of an acid catalyst.

**9.** The optical multilayer film for a liquid crystal display according to any one of claims 2 to 8, wherein the refractive index $n_H$ of the hard coat layer and the refractive index $n_L$ of the low refractive index layer satisfy the following three formulae [4], [5] and [6],

$$\text{Formula [4]}: 1.25 \leqq n_L \leqq 1.35$$

$$\text{Formula [5]}: n_H \geqq 1.55$$

$$\text{Formula [6]}: (n_H)^{1/2} - 0.15 < n_L < (n_H)^{1/2} + 0.15$$

**10.** The optical multilayer film for a liquid crystal display according to any one of claims 2 to 9, which has a reflectivity of not larger than 0.7% at a wavelength of 550 nm and a reflectivity of not larger than 1.5% at a wavelength in the range of 430 nm to 700 nm.

**11.** The optical multilayer film for a liquid crystal display according to any one of claims 2 to 10, wherein the substrate film has a die line with a depth or height of not larger than 0.1 μm.

**12.** The optical multilayer film for a liquid crystal display according to any one of claims 2 to 11, wherein the transparent resin is selected from the group consisting of a polymer resin having an alicyclic structure, a cellulose resin and a polyester resin.

**13.** The optical multilayer film for a liquid crystal display according to any one of claims 2 to 11, wherein the transparent resin is a polymer resin having an alicyclic structure.

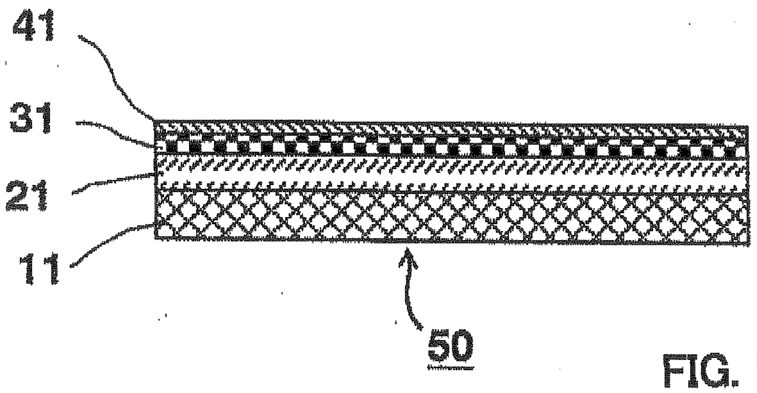


FIG. 1

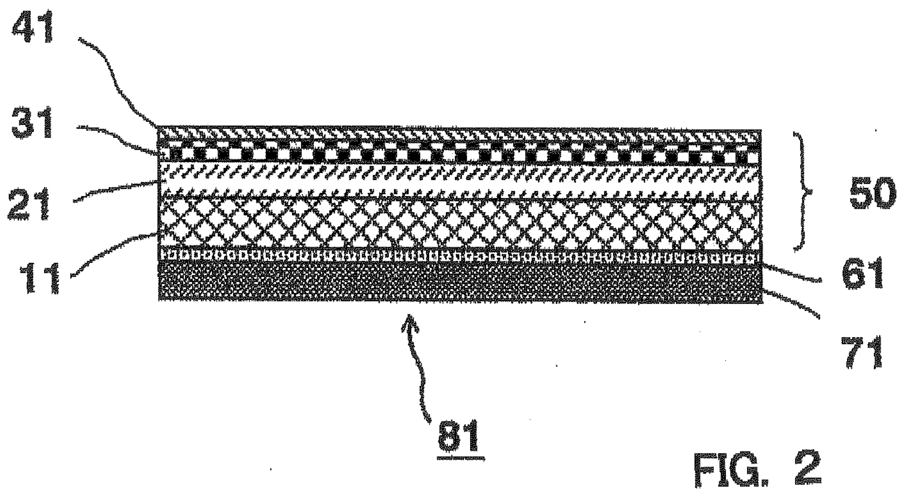


FIG. 2

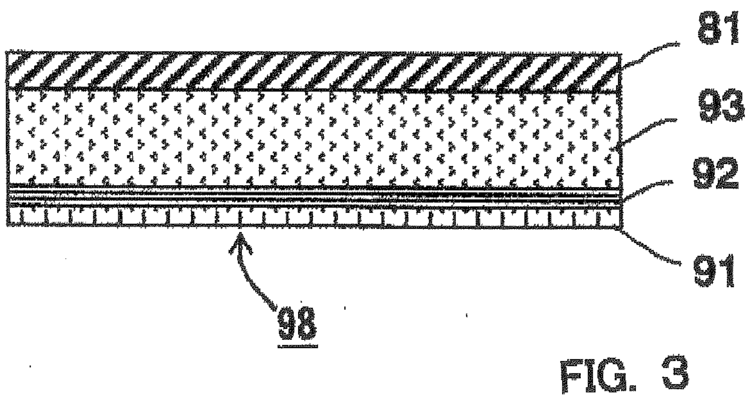


FIG. 3

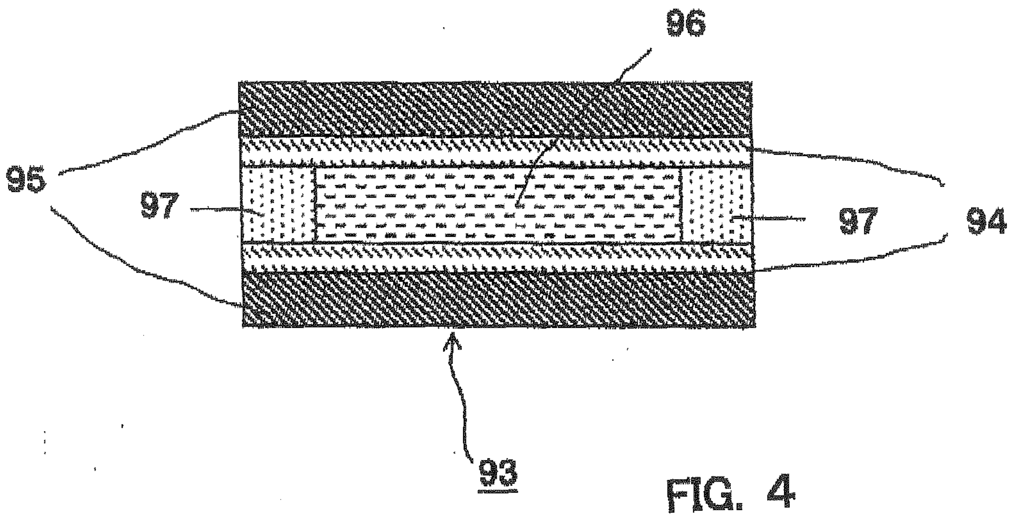


FIG. 4

**INTERNATIONAL SEARCH REPORT**

International application No.
PCT/JP2005/023527

A. CLASSIFICATION OF SUBJECT MATTER
*G02B1/11*(2006.01), *G02B1/10*(2006.01), *G02F1/1335*(2006.01), G02B5/30 (2006.01)

According to International Patent Classification (IPC) or to both national classification and IPC

B. FIELDS SEARCHED

Minimum documentation searched (classification system followed by classification symbols)
*G02B1/11*(2006.01), *G02B1/10*(2006.01), *G02F1/1335*(2006.01), G02B5/30 (2006.01)

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2004-272197 A (Dainippon Printing Co., Ltd.),<br>30 September, 2004 (30.09.04),<br>Claims; Par. Nos. [0023] to [0025], [0031], [0044] to [0052], [0065] to [0068], [0094], [0101]<br>(Family: none) | 1-3,7,9-13<br>4-5,8 |
| Y | JP 11-258403 A (Fuji Photo Film Co., Ltd.),<br>24 September, 1999 (24.09.99),<br>Claim 1; Par. Nos. [0008] to [0009], [0019] to [0020], [0026] to [0035]<br>(Family: none) | 4-5 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>30 March, 2006 (30.03.06) | Date of mailing of the international search report<br>11 April, 2006 (11.04.06) |
| Name and mailing address of the ISA/<br>Japanese Patent Office<br><br>Facsimile No. | Authorized officer<br><br><br>Telephone No. |

Form PCT/ISA/210 (second sheet) (April 2005)

**INTERNATIONAL SEARCH REPORT**

International application No.
PCT/JP2005/023527

C (Continuation). DOCUMENTS CONSIDERED TO BE RELEVANT

| Category* | Citation of document, with indication, where appropriate, of the relevant passages | Relevant to claim No. |
|---|---|---|
| X | JP 2003-205581 A (Nitto Denko Corp.),<br>22 July, 2003 (22.07.03),<br>Par. Nos. [0012] to [0014], [0021], [0029] to [0038]<br>& US 2003/0076596 A1 | 6 |
| Y | JP 2003-202406 A (Matsushita Electric Works, Ltd.),<br>18 July, 2003 (18.07.03),<br>Par. Nos. [0044], [0062] to [0064]; examples<br>& WO 03/035780 A1 & EP 1447433 A1 | 8 |
| Y | JP 57-209817 A (Jerzy W. Zarzycki),<br>23 December, 1982 (23.12.82),<br>Full text; all drawings<br>& US 4432956 A1 & EP 0067741 A2<br>& FR 2507171 A1 | 7 |
| Y | JP 2004-287123 A (Nippon Zeon Co., Ltd.),<br>14 October, 2004 (14.10.04),<br>Preparation example 1<br>(Family: none) | 11 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H4357134 A
- JP 2002328202 A
- JP 2002321302 A
- US 4402827 A
- US 4432956 A
- US 4610863 A
- JP H5279011 A
- JP H7138375 A


### Non-patent literature cited in the description


- **S.P. MUKHERJEE et al.** *J. Non-Cryst. Solids,* 1982, vol. 48, 177
- **J.H. SIMMONS et al.** *J. Non-Cryst. Solids,* 1994, vol. 178, 166